# EUROPEAN PATENT SPECIFICATION

(11) **EP 4 441 438 B1**
(45) Date of publication and mention of the grant of the patent: **22.04.2026**
(21) Application number: 22846981.3
(22) Date of filing: 03.12.2022
(51) Int. Cl.: F24F 5/00, F24F 7/00, F24F 7/04, E04B 1/00, F24F 7/02

(54) **USE OF PASSIVE COOLING MATERIALS TO GENERATE FREE CONVECTIVE AIR FLOW**
VERWENDUNG PASSIVER KÜHLMATERIALIEN ZUR ERZEUGUNG EINES FREIEN KONVEKTIVEN LUFTSTROMS
UTILISATION DE MATÉRIAUX DE REFROIDISSEMENT PASSIFS POUR GÉNÉRER UN FLUX D'AIR PAR CONVECTION LIBRE

(43) Date of publication of application: 09.10.2024
(73) Proprietor: Greenberger, Hal P., Natick, MA 01760 (US)
(72) Inventor: Greenberger, Hal P., Natick, MA 01760 (US)
(74) Representative: Cabinet Novitech
(86) International application number: PCT/US2022/051747
(87) International publication number: WO 2023/102246

(56) References cited:
- EP-A1- 3 106 815
- WO-A1-2015/087035
- CN-U- 211 451 236
- US-B2- 11 067 316

## Description

### BACKGROUND

This invention relates to passive cooling. All objects radiate electromagnetic energy as a function of their temperature. Much of the energy radiated by an earthbound object is absorbed by the atmosphere or other nearby objects. However, infrared radiation in the 8 - 14 µm wavelength range, known as the atmospheric window, is not absorbed by the atmosphere and can leaves the Earth. Objects that radiate in this wavelength range see the cold sink of space. This radiative cooling effect has been known for many years but previously has only been observable at night when the sun is down, so that solar radiation is not heating the object more than it is cooled by the radiated cooling effect. Document WO-2015/087035-A describes a passive cooling assembly for generating free convective air flow in an air duct with a passive cooling material assembly. However, recent advances in material science have produced materials that have the potential to provide radiative cooling, even in the presence of direct sunlight.

### SUMMARY

The invention is defined by the independent claims which provide a temperature reducing assembly for generating free convective air flow and a method for generating free convective air flow with a temperature reducing assembly. Preferred embodiments of the invention are provided in the dependent claims.

In one aspect, a temperature reducing assembly for generating free convective air flow includes an air transport duct, the air transport duct defining a cross-sectional area and a length from a first end to a second end, the cross section generally characterized by a width and a depth, the air transport duct comprises first and second openings and at least one side wall between the first end and the second end, a passive cooling material assembly capable of generating a cooling power useful for cooling its surroundings while exposed to solar irradiation, without the provision of external electrical power, the passive cooling material assembly possesses a first light controlling property and a first net energy radiating property, the passive cooling material assembly comprises at least a portion of the first side wall. The first opening allows air to enter the air transport duct through the first opening for cooling by the passive cooling material assembly and the second opening allows air cooled by the passive cooling material assembly to exit the air transport duct through the second opening. The temperature reducing assembly is constructed and arranged so that it can be oriented with respect to gravity to facilitate free convective air flow from the first opening to the second opening.

Embodiments may include one of the above and/or below features, or any combination thereof as long as they fall within the scope of the appended claims.

A flow control structure constructed and arranged to allow a user to alter air flow through the air transport duct.

The first light controlling property comprises a net reflectivity to incident electromagnetic energy, integrated over the 200 - 800 nm wavelength region of the solar irradiance spectrum, of greater than 80% and the first net energy radiating property comprises a net emissivity for electromagnetic radiation, integrated over the 8 - 14µm wavelength band, of greater than 0.7.

The first light controlling property is provided by a first light controlling material and the first net energy radiating property is provided by a separate, first net energy radiating material, where the first light controlling material comprises at least a first portion of the at least one side wall of the air transport duct and the first net energy radiating material comprises at least a second portion of the at least one side wall of the air transport duct, where air flowing within the air transport duct flows between the first light controlling material and the first net energy radiating material.

The first light controlling material possesses a second light control property, where the second light control property comprises a net transmissibility for incident electromagnetic energy, integrated over the 8 - 14 µm wavelength atmospheric window, of greater than 70%.

The first light controlling property and the first net energy radiating properties are provided by a first net energy radiating material, and a second light controlling property comprising a net transmissibility for incident electromagnetic energy, integrated over the 8 - 14 µm wavelength atmospheric window, of greater than 70% is provided by a light transmission material that possesses the second light controlling property.

The light transmission material is at least a first portion of the at least one side wall of the air transport duct and the first net energy radiating material is at least a second portion of the at least one side wall of the air transport duct, where air flowing within the air transport duct flows between the light transmission material and the first net energy radiating material.

The light transmission material comprises polyethylene or a hydrogenated and cross-linked polynorbornene.

The first light control property is provided by a porous polymer material, where the porosity of the polymer material controls the light controlling reflectivity property.

The light controlling material comprises a foamed polymer, where pores in the light controlling material are formed by a gas injection and de-pressurization process applied to the light controlling material during its manufacture.

The light controlling material comprises a membrane of polymer fibers, where spaces between the polymer fibers provide the porosity.

The temperature reducing assembly is constructed and arranged to be locatable in a roof of an occupant shelter.

The passive cooling material assembly comprises a coating that is applied to at least a portion of the at least one wall of the air transport duct, where the coating provides both the light controlling property and the net energy radiating property.

The net energy radiating property is provided by a net energy radiating material that comprises a distribution of silicon dioxide microspheres dispersed throughout a polymer film.

In another aspect, a temperature reducing assembly for generating free convective air flow includes an air transport duct that defines a cross-sectional area and a length from a first end to a second end of the air transport duct, the cross section generally characterized by a width and a depth, where the air transport duct further includes first and second openings located in first and second ends respectively, at least one outer wall, and a center wall that lengthwise bisects the air transport duct, a passive cooling material assembly, capable of generating a cooling power useful for cooling its surroundings while the passive cooling material assembly is exposed to solar irradiation, without the provision of external electrical power, where the passive cooling material assembly possesses a first light controlling property and a net energy radiating property, where the passive cooling material assembly comprises at least a portion of the center wall, where the first opening allows air to enter the air transport duct through the first opening to be cooled by the passive cooling material assembly, where cooled air within the air transport duct can exit the air transport duct through the second opening, where air flowing within the air transport duct can flow over first and second outer surfaces of the center wall, where the temperature reducing assembly is constructed and arranged so that it can be oriented with respect to gravity to facilitate free convective air flow from the first opening to the second opening.

Embodiments may include one of the following features, or any combination thereof as long as they fall within the scope of the appended claims.

The first light controlling property comprises a net reflectivity to incident electromagnetic energy, integrated over the 200 - 800 nm wavelength region of the solar irradiance spectrum, of greater than 80%, and the net energy radiating property comprises a net emissivity for electromagnetic radiation, integrated over the 8 - 14 µm wavelength band, of greater than 0.7.

The net energy radiating property is associated with the center wall of the air transport duct.

The first light controlling property is associated with the center wall.

A first portion of the at least one outer wall possesses a second light transmission property, where the second light transmission property comprises a net transmissibility for incident electromagnetic energy, integrated over the 8 - 14µm wavelength atmospheric window, of greater than 70%.

The first portion of the at least one outer wall is also associated with the first light control property.

A second portion of the at least one wall comprises a second light transmission property, of a net transmissibility for incident electromagnetic energy, integrated over the 8 - 14 µm wavelength atmospheric window, of greater than 70%.

A removable cover for covering at least the outer surface of the first wall, where the removable cover has a reflectivity of at least 70% within the 8 - 14 µm wavelength LWIR atmospheric window, to substantially reduce passive cooling power provided by the passive cooling material assembly.

In another aspect, a method for generating free convective air flow with a temperature reducing assembly includes the steps of constraining the flow of air with an air transport duct, the air transport duct having a cross section that extends over a length from a first end to a second end of the air transport duct, the air transport duct further comprising first and second openings in the first and second ends respectively; cooling at least one wall of the air transport duct with a passive cooling assembly, wherein the at least one wall is coupled between the first and second ends where the passive cooling assembly is capable of providing cooling power for cooling its surroundings while exposed to solar irradiation without provision of external electrical power; flowing air into the air transport duct through the first opening to be cooled by the passive cooling material assembly; flowing cooled air out of the air transport duct through the second opening, and; orienting the temperature reducing assembly with respect to gravity to facilitate free convective air flow from the first opening to the second opening.

### BRIEF DESCRIPTION OF THE DRAWINGS

Various aspects of at least one embodiment are discussed below with reference to the accompanying Figures, which are not intended to be drawn to scale. The Figures are included to provide illustration and a further understanding of the various aspects and embodiments, and are incorporated in and constitute a part of this specification, but are not intended to define the limits of the disclosure. In the Figures, each identical or nearly identical component that is illustrated in various Figures is represented by a like numeral. For the purposes of clarity, some components may not be labeled in every figure. In the Figures:
Fig. 1 is an example of a temperature reducing assembly incorporating a passive cooling material and an air transport duct.
Fig. 2 is an example of a temperature reducing assembly incorporating a passive cooling material and an air transport duct.
Fig. 3 is an example of a temperature reducing assembly incorporating a passive cooling material and an air transport duct.
Fig. 4 is an example of a temperature reducing assembly incorporating a passive cooling material and an air transport duct with thermal insulation layers.
Fig. 5A is a cross section view of an example of an occupant shelter incorporating a temperature reducing assembly incorporating passive cooling material.
Fig. 5B is an exterior view of the example occupant shelter of Fig. 5A.
Fig. 6A is a cross section view of an example of an occupant shelter incorporating a temperature reducing assembly incorporating passive cooling material.
Fig. 6B is an exterior view of the example occupant shelter of Fig. ^A.
Fig. 7 is a cross section view of an example of an occupant shelter incorporating a temperature reducing assembly incorporating passive cooling material.
Fig. 8 is a cross section view of an example of an occupant shelter incorporating a temperature reducing assembly incorporating passive cooling material.
Fig. 9 is a cross section view of an example of an occupant shelter incorporating a temperature reducing assembly incorporating passive cooling material, and internal air recirculation vents.
Fig. 10 is an exterior view of an example of an occupant shelter incorporating a temperature reducing assembly incorporating passive cooling material, with a multi-door entryway.
Fig. 11 is an exterior view of a shelter using parallel arrangement of two different types of NEM's on different roof sections.
Fig. 12A is an example of a serial configuration of a pair of different NEM types.
Fig. 12B is an example of a serial configuration of a pair of different NEM types.
Fig. 12C is an example of a serial configuration of a pair of different NEM types coupled to a representative duct structure.

### DETAILED DESCRIPTION

Examples of the methods, systems, and apparatuses discussed herein are not limited in application to the details of construction and the arrangement of components set forth in the following description or illustrated in the accompanying drawings. The methods and apparatuses are capable of implementation in other examples and of being practiced or of being carried out in various ways. Examples of specific implementations are provided herein for illustrative purposes only and are not intended to be limiting. In particular, functions, components, elements, and features discussed in connection with any one or more examples are not intended to be excluded from a similar role in any other examples.

Examples disclosed herein may be combined with other examples as long as they fall within the scope of the appended claims, and references to "an example," "some examples," "an alternate example," "various examples," "one example" or the like are not necessarily mutually exclusive and are intended to indicate that a particular feature, structure, or characteristic described may be included in at least one example. The appearances of such terms herein are not necessarily all referring to the same example.

Also, the phraseology and terminology used herein is for the purpose of description and should not be regarded as limiting. Any references to examples, components, elements, acts, or functions of the products, systems and methods herein referred to in the singular may also embrace embodiments including a plurality, and any references in plural to any example, component, element, act, or function herein may also embrace examples including only a singularity. Accordingly, references in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms.

Having described above several aspects of at least one example, it is to be appreciated various alterations, modifications, and improvements will readily occur to those skilled in the art. Accordingly, the foregoing description and drawings are by way of example only, and the scope of the invention should be determined from proper construction of the appended claims.

A Net Emissive Material (NEM) is a material that can control electromagnetic energy it absorbs and electromagnetic energy emitted by the material, in a manner that allows the material under certain conditions to maintain its temperature at a level that is lower than the temperature of its surroundings, using purely passive means. A NEM does not require any input electrical power, for example from a manmade power supply, to generate its cooling power. An NEM material passively generates an amount of cooling power which can be used to cool objects and structures as desired.

NEM's provide cooling power by reflecting a high percentage of incident solar radiation, while simultaneously emitting electromagnetic energy away from the material. This disclosure describes examples structures using NEM's that illustrate novel ways of arranging elements that make up an NEM and novel ways of integrating NEM's with their surroundings, to more effectively use the available cooling power.

This disclosure considers two types of NEM's. We refer to these types of NEM's as emissive and fluorescent. An emissive type NEM should possess high emissivity in the long wave infra-red (LWIR) wavelength region between 8-14µm, known as the atmospheric window, and should provide high reflectivity to incident solar radiation in the visible and UV wavelength regions, to minimize heating of the material by the incident solar radiation. Energy emitted by the NEM within the atmospheric window is removed from the NEM, allowing its temperature to be lowered relative to its surroundings. Emissive radiation is more efficient in the atmospheric window because this energy is emitted to the cold sink of space. The emitted energy depends on the emissivity of the object and the temperature difference of the emitting object relative to its surroundings. In the LWIR window the surroundings are effectively the cold sink of space, which provides a beneficial higher effective temperature difference.

It should be noted that the atmosphere is not highly transparent to all radiation occurring in the 8 - 14µm region. The actual transmission properties through the atmosphere are complex, and there are narrow band variations in absorption over this band. An ideal emitter would have high emissivity only at those wavelengths where the atmosphere is transparent, and would not be emissive in for wavelengths where the atmosphere absorbs energy. An emitter with emissivity that varies over this LWIR wavelength region to more closely match actual transmissivity through the atmosphere is contemplated for use herein. For example, multi-layer optical interference filters are known and can be designed to have more complex spectral characteristics, to provide an emissivity that more closely matches the atmospheric LWIR transmission spectrum. Such emitters can provide enhanced cooling power but are more complex and costly to fabricate. In some examples, a simple broadband emitter, for example a material primarily formed from carbon such as carbon black or a layer of carbon nanotubes, may be used. Examples are not limited in the type of emitter used. Though examples described herein discuss emissivity only in terms of the emissivity over the LWIR wavelength band, this is for convenience and is not meant to be limiting. Examples are not limited to only using emitters that have a constant or near constant emissivity over the LWIR band. Any emitter that can provide high emissivity at IR wavelengths where the atmosphere is highly transmissive can be used in any emissive example described.

An emissive type NEM can be a coating or paint. A number of highly reflective and LWIR emissive coatings have been disclosed. For example, one suitable coating is disclosed in: "Hierarchically Porous Polymer Coatings for Highly Efficient Passive Daytime Radiative Cooling", by Jyotirmoy Mandal, Yanke Fu, Adam C. Overvig, Mingxin Jia, Kerui Sun, Norman N. Shi, Hua Zhou, Xianghui Xiao, Nanfang Yu1, Yuan Yang, in the journal Science 362, 315-319 (2018) 19 October 2018. This coating can be applied to a substrate material to turn it into an NEM. In order to be useful in some of the applications disclosed herein, the substrate may need to have certain properties such as high transmissivity in the LWIR wavelength region. In some examples, a suitable NEM can be formed by applying a highly visible reflecting and highly LWIR emissive coating onto a polyethylene film or polyethylene fabric substrate. Substrates are not limited to polyethylene and other substrate materials can be used, such as cross linked and hydrogenated polynorbornenes. In some examples, the substrate can be highly emissive in the LWIR wavelength region, and for example can be formed from a carbon impregnated polymer.

A fluorescent NEM radiates energy away from the material using a fluorescence mechanism. Many materials fluoresce when excited with electromagnetic radiation. Typically, fluorescence involves absorbing a photon of a certain energy and wavelength and emitting a photon at a different energy (usually lower) and wavelength. However, a class of materials that employ suitable doping can achieve a phenomenon known as anti-stokes fluorescence. In anti-stokes fluorescence, when a photon of a certain wavelength and energy is absorbed, a new photon of a different (higher) energy and wavelength is emitted. This results in a net loss of energy from the material, providing cooling power. The extra energy of the emitted photon is provided by atomic lattice vibration (heat) of the material, and the process of Anti-Stokes fluorescence effectively removes heat from the material.

Materials and methods for providing an anti-stokes fluorescent material operable under solar irradiance are available from Solcold having a place of business at: 13, HaMazmera St., Nes Ziona, Israel. The anti-stokes fluorescent cooling devices are described in US patent 1 1,067,316, "Cooling with Anti-Stokes Fluorescence", filed 1/16/2019.

Anti-Stokes fluorescence has been exploited in the laboratory where lasers are used to provide a narrow band electromagnetic excitation to a suitably doped material to achieve cooling. However, lasers are not required to exploit anti-stokes fluorescence. It is possible to construct a bandpass filter centered around the primary wavelength used by an anti-stokes fluorescent material, with sufficiently narrow bandwidth so as to only pass light useful for exciting the fluorescent behavior (and to also transmit light at the wavelength of the emitted photon), while reflecting other incident light.

Each type of NEM needs to control light reflection, transmission and absorption. Emissive type NEM's attempt to reflect as much of the incident solar irradiation as possible, and typically possess a reflectivity integrated over the wavelength band of 200 to 800 nm of at least 80%, and preferably greater than 90%, and more preferably as large as is possible. Fluorescent type NEM's attempt to reflect as much of the incident solar irradiation as possible over the 200 to 800 nm band, except for radiation within a narrow band of wavelengths that is chosen to excite anti-stokes fluorescence in the fluorescent material. Emissive type NEM's require high emissivity in the 8-14 µm wavelength region, with a net emissivity for electromagnetic radiation, integrated over the 8 - 14 µm wavelength band of greater than 0.7, or more preferably greater than 0.8, and more preferably as high an emissivity as is possible to obtain. Fluorescent NEM's do not control behavior in this LWIR region, though in some applications described later control of emissivity in this LWIR region is also desirable for fluorescent NEM's.

Emissive type NEM's are operable as long as the emissive material can "see" the sky, while fluorescence type NEM's are only operable when light of the proper wavelength is incident on the material. Emissive NEM's cooling effectiveness increases at night when solar irradiance is no longer present, while fluorescent NEM's effectiveness drops substantially at night because the level of incident light in the narrow wavelength band drops to approach zero.

NEM materials should absorb as little incident solar radiation as possible. In general, NEM's should be highly reflective in the visible wavelength band, and preferable are also reflective in the longer wavelength UV band. The materials are highly reflective and not absorptive in order to minimize any heating that may occur from the incident solar radiation.

Examples disclosed herein couple passive cooling materials such as NEM's to air transport ducts to cool air within the duct. Cooling air within a duct can be used to cause free convective air flow, which can be made use of to improve cooling dynamics. The temperature difference provides the driving force for the convective flow. Convective flow in enhanced when ducts are oriented with respect to gravity to cooled denser air to flow out of the bottom of the duct. Intake vents for a duct should be located above exit vents for the duct, to provide free convective flow form the intake vent to the exit vent.

The air transport duct structures can be used in various applications. Application to occupant shelters are disclosed and shown in various figures. Other applications are possible such as a window shades, a cooling reflector for vehicle interior, umbrellas and awnings. Any place where it is desired to provide a flow of cool air passively, that has visibility to the sky, can make use of the structures disclosed herein. Applications that have direct access to the sky can use any of the arrangements disclosed herein. Applications where a cooling device may see the sky through a window, such as in a vehicle interior or use as a window shade, must take into account the optical properties of the window. Most windows for buildings and vehicles have coatings that reduce LWIR transmission. As such, placing a passive cooling structure using an emissive NEM behind a window will be ineffective. However, a fluorescent NEM should work as intended in this application, as the known fluorescent NEM's operate on visible wavelengths that can be transmitted through window glass.

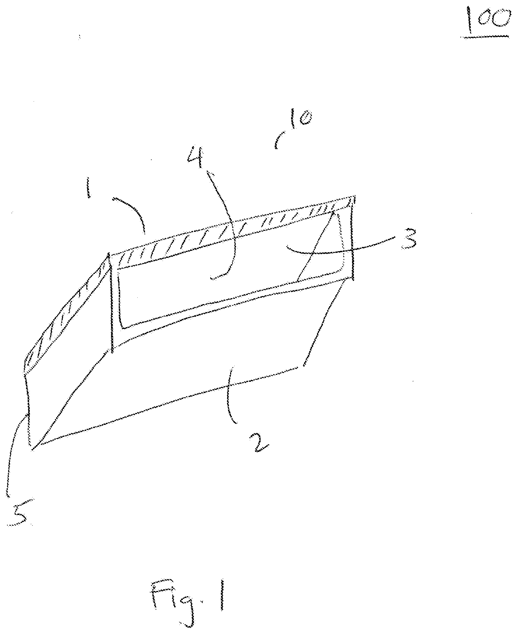

Fig. 1 depicts one example of temperature reducing system 100 having an air transport duct 10 with passive cooling material coupled to one wall of the duct. Both types of NEM's require that some portion of the NEM have a "view" of the sky. Fluorescent NEM'S need incident light in the operable wavelength band to generate cooling thru fluorescence, and emissive NEM's need to "see" the sky in order to emit LWIR energy thru the atmosphere to space.

Duct 10 of Fig. 1 is shown with a rectangular cross section. This is for illustration purposes and any cross-sectional shape may be used. Duct 10 is shown as having opposite side walls 2 and 3. In some examples, however, the cross section may be a continuous shape such as an ellipse. In such cases, there effectively is only one continuous wall. For such examples, the single continuous wall can be divided into two wall portions, where the portions are opposite each other. For convenience, all ducts shown and disclosed herein will be described as rectangular, but continuous cross sections where first and second walls are more properly defined as first and second opposite facing portions of a single wall are contemplated.

NEM 1 of Fig. 1 is coupled to side wall 3. Duct 10 has openings 4 and 5 located in opposite ends of duct 10. If duct 10 is suitably oriented, NEM 1 can provide cooling power to air located within the interior of duct 10. As the air inside duct 10 cools, its density increases, and it falls out of opening 5 in the bottom end of duct 10. This lowers the air pressure within duct 10 which acts to draw air into duct 10 through upper opening 4. This process generates free convective air flow from the top end to the bottom end of duct 10, which will continue as long as the air within duct 10 is cooled below the temperature of the surrounding air.

In one example, duct is arranged so that NEM 1 is facing towards the sky. In this orientation, both types of NEM's can function. If NEM 1 is of the emissive type, it has a view of the sky so it will be free to emit energy in the LWIR region to space. If NEM 1 is of the fluorescent type, solar irradiance will fall on the material and appropriate wavelengths will be transmitted through its bandpass filtering behavior to excite the anti-stokes fluorescence. In the example where NEM 1 is facing up towards the sky, wall 2 of duct does not need to have particular optical performance characteristics. It should, however, provide some thermal resistance to heat transferred from the environment surrounding wall 2 into and through wall 2 to the interior air space of duct 10. In some examples, it is desirable for wall 2 to have high transmissivity in the LWIR wavelength region. This would allow LWIR electromagnetic radiation radiated by a heat source facing wall 2 to reach NEM 1. Such an arrangement is useful when a duct is coupled to a shelter structure where the heat source may be an occupant of the shelter and it is desirable to remove their radiated heat from the structure. Energy radiated to the NEM can be absorbed by the NEM and re-radiated to space. Shelters of particular use have a structure where there is no attic space. Tents, tiny houses, garages and the like are all structures with this arrangement. While passive cooling as described herein can be used with shelters having attics, in general there is only a small benefit form cooling the attic space. Passive cooling materials are preferably located on the roof of a shelter so that see the sky.

If duct 10 were flipped upside down so that side wall 2 were facing upward and side wall 3 was facing down so that NEM 1 was facing down, the arrangement can still function but only if side wall 2 has certain optical properties. Since side wall 2 will be sitting between the sky/sun and the NEM, side wall 2 needs to allow appropriate wavelength bands of light to be transmitted therethrough. For a fluorescent NEM, wall 2 needs to at least be highly transmissive for light in the narrow wavelength band for fluorescence, so it reaches the NEM to generate the anti-stokes fluorescence. For an emissive NEM, wall 2 needs to be highly transmissive for light in the LWIR wavelength band to allow LWIR radiation emitted by the NEM to transmit through wall 2 out to space. When examples of temperature reducing assembly 100 are used in various applications which are described in more detail later, the benefit to this flipped arrangement will become clearer.

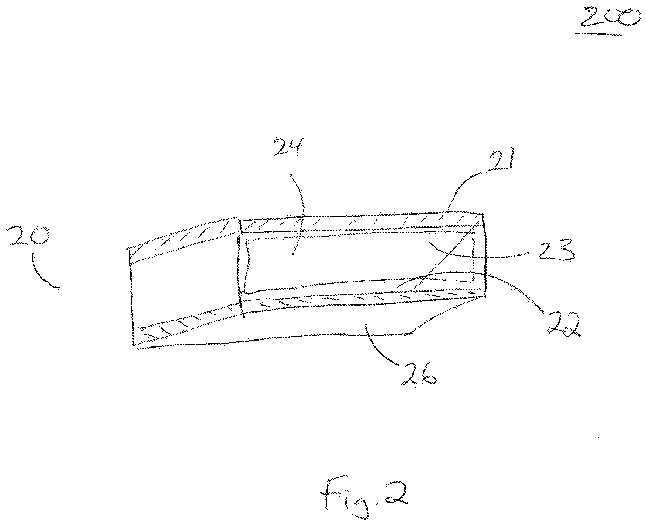

Fig. 2 depicts temperature reducing assembly 200 with duct 20 having generally opposing side walls 22 and 23. The cross section of duct 20 is shown as rectangular, but this is for convenience only. The cross section of duct 20 can be of any arbitrary shape. Fig. 2 depicts an example where the functions of the NEM have been split into 2 separate elements. Light controlling material 21 is coupled to side wall 23 of duct 20 and faces up towards the sky. Net energy radiating material 26 is coupled to bottom side wall 26 of duct 20 and faces down. Together, light control material 21 and net energy radiating material 26 provide the NEM function.

For an emissive type NEM, light controlling material 21 is reflective for solar irradiance in the visible wavelength region and as much of the UV wavelength region as possible, where a desired reflectivity is as described elsewhere for a non-split emissive NEM. Light controlling material 21 further should be transmissive in the LWIR wavelength region so that electromagnetic energy emitted by net energy radiating material 26 can be transmitted through light controlling material 21 into space. Light controlling material 21 preferably has a net transmissivity for electromagnetic radiation, integrated over the 8 - 14µm wavelength band, of greater than 70%, or more preferably greater than 80%, and more preferably as high a transmissivity as is possible to obtain.

For an emissive type NEM, net energy radiating material 26 has high emissivity over the LWIR atmospheric window. Preferably, net energy radiating material 26 has a net emissivity for electromagnetic radiation, integrated over the 8 - 14 µm wavelength band, of greater than 0.7, more preferably greater than .8, and more preferably as high an emissivity within the atmospheric window as is obtainable.

If the split NEM depicted in Fig. 2 is of the fluorescent type, then light control material 21 provides a bandpass filter characteristic where a wavelength band of electromagnetic energy that excites anti-stokes fluorescence in net energy radiating material 26 passes through light control material 21 with minimal attenuation, and light of wavelengths outside of the fluorescent wavelength band are reflected by light control material 21.

Split function NEM's provide benefit in certain applications where it is desired to keep the net energy radiating material from coming into direct contact an environment where unwanted heat can be transferred into the net energy radiating material. As will be described later, in some examples an air transport duct is fit into a roof or side wall of an occupant shelter where it is desired to cool the interior space of the shelter with convective air flow provided by the passively cooled duct. In such examples, having the net energy radiating material reside within the conditioned space is desirable.

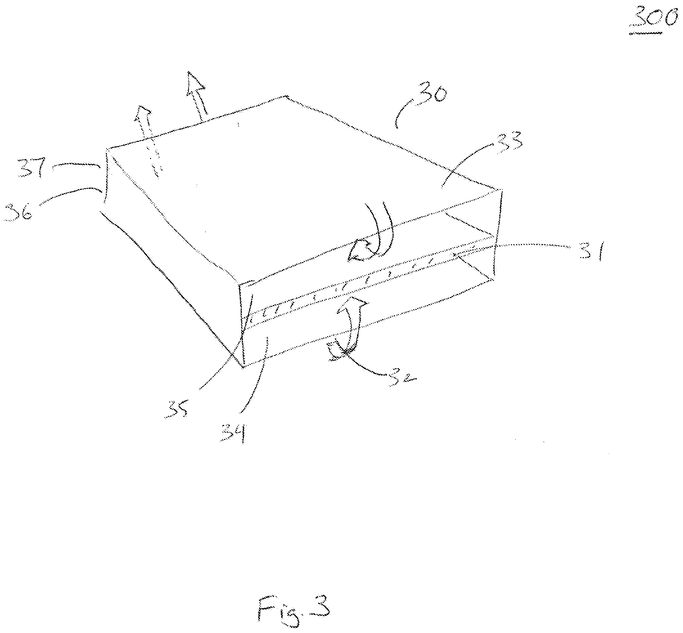

Fig. 3 depicts temperature reducing assembly 300. NEM 31 bisects duct 30 such that only air within duct 30 comes in direct contact with NEM 31. This arrangement ensures that both sides of NEM 31 are used to provide cooling to air within the duct, and heat transfer into NEM 31 from the ambient environment is reduced. For an emissive type NEM, at least one of or both of walls 32 and 33 should be highly transmissive in the LWIR wavelength region, and can be either transmissive or reflective in the visible and UV wavelength regions, as described earlier.

If NEM 31 is of a split type, one of the outer walls should be made highly reflective in the visible and UV wavelength regions, as described earlier, and the central element in duct 30 would then just be the net energy radiating portion of an NEM.

If NEM 31 is of the fluorescence type, then at least one of walls 32 and 33 should have high transmissivity at least in the narrow band wavelength region needed for anti-stokes fluorescence. The wall can either be made to exhibit a bandpass characteristic transmitting just the narrow wavelength band for anti-stokes fluorescence and reflecting other incident light in the visible and UV wavelength bands, so that it acts as the light control material for NEM 31 forming a split function NEM, or it can be made highly transmissive in the visible and UV range. However, since the object is to cool air within the duct, in general it is preferable to keep electromagnetic energy that is not useful for providing a passive cooling function from entering the duct air space or being absorbed by the duct walls or the NEM. Stated another way, in general it is preferrable for outer facing walls of a temperature reducing assembly using NEM's to be reflective for incident electromagnetic radiation over as large a portion of the incident solar radiation spectrum as is possible, save for those wavelength regions that are used by the NEM for cooling (LWIR, narrow band fluorescence region, or both).

In general, for all examples disclosed herein, it is desirable to reduce heat transfer from the ambient environment into the surfaces of the NEM, or into at least the net energy radiating portion of the NEM (for a split function NEM structure). By incorporating ducts into structures such as shelters, shades, tiny homes, umbrellas and the like, it is possible to minimize direct contact with and convective air flow over the NEM by air in the unconditioned ambient environment, and to maximize contact and air flow over the NEM with air in or being provided into the conditioned space. This maximizes the cooling of the structure provided by passive cooling materials. Examples disclosed herein arrange passive cooling materials in air transport ducts in a manner that focusses the available cooling power into air that is to be conditioned, and not into the ambient environment where it is not useful.

In some examples, it may be desirable to add an insulating layer onto a surface of the NEM, or a surface of a duct to which an NEM is coupled, or both. An insulation layer can act as a convection barrier and insulator to minimize heat transfer from ambient air in contact with and flowing over the otherwise exposed surface of the NEM or duct. If insulation layers are used, they should not impede the functioning of the NEM. That is, the light control function and energy radiating functions of the NEM, whether whole or split function, should not be substantially degraded when insulation layers are added.

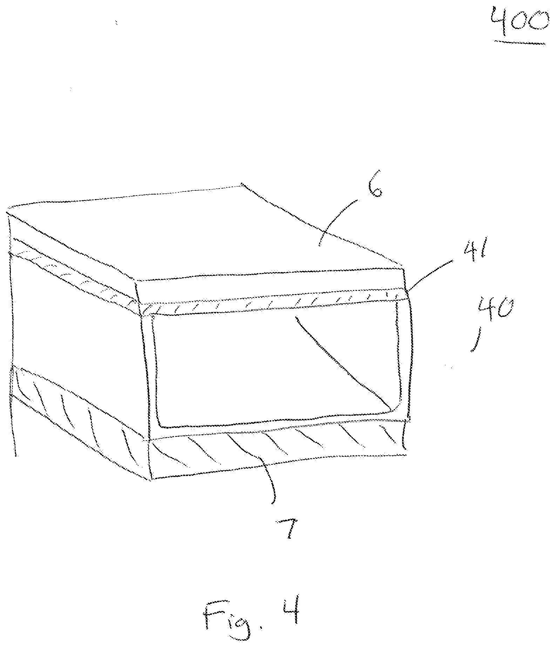

Fig. 4 depicts temperature reducing structure 400. Duct 40 is identical to duct 10 of Fig. 1, with addition of insulation layers 6 and 7. In some examples, only one of insulation layers 6 and 7 may be used. In other examples, both insulation layers can be used. Insulation layer 6 reduces conducted and convection heat transfer from the environment outside of duct 40 into NEM 41. In order for NEM 41 to continue to function, insulation layer 6, at a minimum, must allow certain wavelengths of light to be transmitted therethrough. If NEM 41 is of an emissive type, layer 6 should be highly transmissive in the LWIR wavelength region, and it should not absorb significant energy in the visible and UV wavelength regions. Layer 6 can either be transparent or reflective for light in the visible and UV wavelength regions. If layer 6 is also made reflective in the visible and UV wavelength bands, then NEM 41 only needs to provide high emissivity in the LWIR wavelength band. If layer 6 is transparent in the visible and UV wavelength bands, then NEM 41 must provide high reflectivity in these bands as well.

If NEM 41 is of the fluorescence type, layer 6 must be transmissive in at least the narrow wavelength band which excites the anti-stokes fluorescence in NEM 41. Layer 6 can either be transparent or reflective in the visible and UV wavelength regions. If layer 6 is made reflective, then layer 6 is effectively acting as the light controlling material for NEM 41, and NEM 41 only needs to provide anti-stokes fluorescence behavior. If layer 6 is transparent to visible and UV wavelength bands, then NEM 41 must also provide the bandpass filter functionality.

In general, for air transport ducts, as well as for walls of structures in which the temperature reducing assemblies employing passive cooling materials are used, it is desirable to absorb as little electromagnetic energy from to solar irradiance as possible, to minimize solar heat gain. Materials used for duct walls and shelter walls should be reflective to solar radiation in all wavelength bands other than bands specifically used for passive cooling.

Both for use in air transport ducts and in walls and portions of structures and devices not incorporating net energy radiation materials, it is desirable to have a material that is highly reflective in the visible and UV ranges and highly transmissive in the LWIR region. In a shelter designed to provide cooling for shelter occupants, the occupants are heat sources that reside within the condition interior space. The occupants radiate LWIR to their surroundings. It is desirable to allow this radiation to be transmitted through as much of the shelter structure as possible (it may be absorbed and re-emitted by the NEM), while simultaneously reflecting other incident solar radiation.

Coatings exist (typically metallic layers) that can be used to provide high reflectivity in the visible and UV ranges, but they are often unsuitable for use in shelter side walls or for some duct walls because they also block transmission in the LWIR wavelength region. It should be noted that a fluorescent type NEM can still function if the light control material blocks LWIR. A fluorescent type NEM can use a multi-layer interference bandpass filter, which may use metalized layers, but it would be unsuitable for use in the shelter walls as it would block LWIR (and also pass the narrow band light which would not impinge on fluorescent material and would cause excess heating).

A preferable wall material can be formed from polymer materials that exhibit no or only small absorption peaks in their FTIR spectra, within the 200 - 800nm wavelength range and in the 8 -14µm wavelength range. These materials will not see significant heating from incident solar irradiation and will exhibit high transmissivity in the LWIR region. Any polymer material possessing this absorption property is a candidate material. Polyethylene is one suitable base polymer, and in particular HDPE or even UHMWPE polyethylene may be used. Since the materials have little to no absorption in the visible and longer UV wavelength ranges, their internal structure needs to be manipulated in a manner that provides enhanced reflectivity in these wavelength regions. Visible reflectivity (as well as some degree of reflectivity in the longer UV wavelengths) can be obtained by introducing porosity into the materials.

Porous polymer materials can be formed using a number of processes. In some examples, polymer film is foamed using a gas injection and de-pressurization process. This can be done in a continuous extrusion process, such as the continuous micro cellular foaming extrusion process available from MuCell Extrusion LLC, with a place of business at 212 West Cummings Park, Woburn, MA 01801 USA. In some examples, a foaming process is performed on batches of polymer film where material to be foamed is placed into an autoclave. Gas is injected into the autoclave chamber under controlled pressure and temperature to infuse gas into the polymer material, then de-pressurization is controlled to form pores in the material. The size of pores can be varied by adjusting the process parameters, and additionally through use of particular additives to the base polymer resin.

In some examples, micro or nano diameter polymer fibers are formed through an electrospinning process and layered into a non-woven fiber membrane. Pores are formed in the membrane in the spaces between fibers. Fiber dimensions and fiber volume fraction are controlled in order to control pore size.

In some examples, polymer membranes are formed through a "wet" process involving extrusion of a plasticizer/polymer mixture at elevated temperature, followed by phase separation, biaxial stretching, and extraction of the pore former (i.e., plasticizer). Polyethylene separators for lithium-ion batteries formed using such a process are available from Entek Corporation, with a place of business at: 250 Hansard Ave Lebanon, OR 97355. Other methods of forming a porous wall are also possible and their use is contemplated herein.

To provide optical reflectivity in the visible wavelength region, the mean pore diameter should in general be centered around 1µm, with a majority of pore diameters fitting within a distribution falling between .5 and 4µm. Pores larger than 4µm may start to increase reflectivity in longer wavelength regions which can reduce transmissivity in the LWIR wavelength region. While pores smaller than 0.5µm may aid in reflecting smaller wavelength UV, it is difficult to generate such small pores and if too large of a fraction of pores are of this size, reflectivity in the visible range, which is relatively more important, may be compromised.

Another suitable polymer material is based on the monomer norbornene. Polynorbornene materials can have very low absorption in the visible and UV ranges, and certain grades of materials are used in optical devices where low loss is needed. US pat. 8,703,391 filed 11/29/2001 and titled: "Polymeric Matrix Materials for Infrared Metamaterials" describes a polynorbornene material which has been partially hydrogenated and cross linked via a thiol-ene coupling reaction to form a polymer material with high transmissivity in the LWIR wavelength region. US pat. App. 2005/0029663, filed 8/30/2004 titled: "Polynorbornene Foam Insulation for Integrated Circuits", and US pat. App. 2006/0261484 filed 7/25/2006 titled: "Electronic Apparatus Having Polynorbornene Foam Insulation" describe a method of foaming a polynorbornene material using an autoclave process to form pores of a size that would provide the necessary optical reflectivity.

A suitably porous polynorbornene material with high transmissivity in the LWIR wavelength region can be extruded as a film to be used in the various examples and structures disclosed herein that require high reflectivity in the visible and UV wavelength regions, and high transmissivity in the LWIR regions. Additionally, using a foamed material provides a benefit of having reduced thermal conductivity, as the foamed material provides a degree of thermal insulation. The thickness of the film can be varied as needed depending on the application. For example, a side wall of a structure may be able to tolerate a lower LWIR transmissivity than a material used directly with an NEM. Increased thickness increases mechanical properties and provides additional thermal resistance, though it may lower LWIR transmissivity. Side walls may be made thicker while roof materials may be made thinner.

In some examples, a suitable porous polymer may be laminated to a substrate material. The porous polymer material may be thin and lack sufficient mechanical strength on its own. Laminating the material to a substrate can provide improved mechanical properties for the laminated assembly. Any such lamination should minimally affect the desired optical properties. The substrate should not substantially reduce reflectivity or increase absorption in the visible and UV wavelength regions. It should not substantially affect transmissivity in the narrow wavelength band for anti-stokes fluorescence if used with a fluorescent NEM and should not substantially reduce LWIR transmissivity when used with emissive type NEM's. A woven fabric substrate layer can be used. The weave should be as open as possible to have as high an open area as is practical, while still providing sufficient mechanical strength for the intended application. The fibers used for the fabric should be chosen to have minimal effect in the optical wavelength bands of interest. An open weave HDPE fabric material may be suitable to use as a substrate, though other polymer fibers are possible and are contemplated herein..

The ducts depicted in Figs. 1-4, and that are incorporated into structures as described later, should be formed in a manner that keeps the duct interior from collapsing. For example, if duct walls are formed from film materials (which may be laminated to fabric materials), the duct walls need to have tension applied to keep them from sagging and closing off the duct. The wall materials choses for the duct, and also for walls of shelters that are constructed as tents, should be able to withstand applied tension to hold a desired shape.

Example temporary structures (tents or other easily assembled structures) are formed using NEM's coupled to air transport ducts, to provide passive cooling. Other heat flows into and out of structure interior air space are controlled using various methods. In some examples, passive cooling is supplemented by systems that help reduce parasitic heat flows and enhance overall system performance. The available cooling power of an NEM is a function of the optical and thermal properties of the material, its surface area, parasitic heating, and the environment in which the material is located.

Heat gain within a passive cooling structure interior is a function of the optical properties of the wall and ceiling materials, the thermal properties of the wall materials, heat transport from the ambient external air to the internal conditioned air space of the structure, solar radiation transmitted through walls and roof, and heat sources within the shelter interior conditioned space.

The optical properties of materials control the energy balance of the material. The reflection, transmission, absorption and emission characteristics determine how much heating is caused by incident solar radiation. Net radiant energy flow into/out of the wall and ceiling materials causes their temperature to vary.

A net emissive material radiates more energy away from the material through the atmosphere to space than it absorbs from solar irradiance, providing cooling power. Net emissive materials should have high emissivity in the atmospheric window (8 - 14µm), and high reflectivity to solar irradiance (primarily in the .2 - .8µm wavelength range, but should be reflective for as much incident solar radiation as is possible). The radiated power depends on the emissivity of the material and the atmospheric conditions, and the effective temperature difference between the material and the sink into which the emitted energy is radiated. Radiation is relatively less efficient in low altitude, high humidity and overcast conditions, and relatively more efficient in higher altitude, lower humidity and clear skies.

All wall and ceiling surfaces of a cooling structure should be highly reflective to solar irradiance, to minimize heat gain. Required optical properties in the LWIR atmospheric window wavelength range vary, but in general, as discussed earlier, transmissivity should be high in this wavelength range.

Conduction and convection from air masses to wall surfaces, considering both the interior air space and the exterior ambient environment, and heat conduction through walls, all affect the resultant heat gain/loss of the interior air space. Optimal thermal properties for walls and ceiling differ depending on the configuration.

Conduction and convection from ambient air to exterior facing wall and roof surfaces transfers heat from the ambient environment into the walls and roof, causing their temperature to rise (when ambient temperature exceeds the wall temperature). Reducing the efficiency of heat transport from the external environment into structure walls is desirable. Increasing thermal insulation capability of walls and roof is desirable. Use of convection barriers to keep air from flowing over wall and roof surfaces can reduce convective heat transfer.

As discussed earlier, cooling performance can be enhanced when the solar facing side of an NEM is isolated from the ambient environment, as long as the necessary light transmission properties are not appreciably degraded. A convection barrier can be placed over the exterior facing surface of the NEM to separate it from ambient air flow. This reduces convective heat transfer to the surface. This might be a polyethylene or polynorbornene or other suitable polymer film. A convection barrier separates a surface from the ambient environment but allows required optical energy to be transmitted therethrough. Insulation layers were described previously with respect to Fig. 4. These insulation barriers can and do also act as convection barriers. Again, the construction shown in Fig. 4 is suitable for other implementations of temperature reducing assemblies.

A convective barrier can be used with exterior structure walls. For example, a separate layer of polyethylene material could be placed over but not directly in contact or in minimal contact with structure side walls, to prevent air flow from passing over the wall surface. The convection barrier should have high transmissivity in the LWIR wavelength region to allow LWIR radiation from heat sources located within the structure to pass out of the structure. High reflectivity in the solar irradiance region will be beneficial, though the convection barrier can also be transparent to solar irradiance if the structure wall it is covering is reflective.

Conduction and convection between the structure internal air space and interior facing wall surfaces of NEM's transfers heat from the interior air space into the NEM. In some examples this heat transport is desirable. Since these materials radiate heat out of the structure into space, efficient transfer of heat into these surfaces (by improving conductive and convective heat transfer to the interior facing side of the NEM) may be beneficial, and supplements radiation heat transfer to the materials from heat sources within the interior air space. In some examples, interior facing surfaces of net emissive materials have high surface area, high thermal conductivity, and interior air can be directed over these surfaces to enhance heat transfer.

In some examples, it is desirable to ensure that the only heating of the NEM comes from duct air that is in contact with the NEM. This directs all of the available passive cooling power of the NEM into the duct air. The cooler the duct air can be made, the more free convective air flow that is generated. As is described later, one benefit of generating free convective flow passively is that it can be used to provide air exchange to keep interior air breathable and fresh, without the need for external air movers. In a cooling application where the shelter may be tightly sealed to minimize outside air intrusion, such as is the case for a tight envelope efficient building, some amount of controlled air exchange is needed. Driving air exchange through the cooling duct can reduce parasitic heat gain into the structure.

Conduction and convection between the internal air space and interior facing wall surfaces may transfer heat from the walls into the interior air space, which is undesirable. However, the direction of heat transfer depends on the relative temperatures of wall surfaces and interior air. If the wall surfaces have a temperature lower than the internal air temperature, then heat transfer between the internal air and the walls would be desirable. In general, though, this is unlikely to be the case. Adding insulation to the walls can reduce heat transfer through the walls into the conditioned space. The insulation should be highly transmissive in the LWIR wavelength region, to support LWIR emission from heat sources (occupants) within the shelter interior.

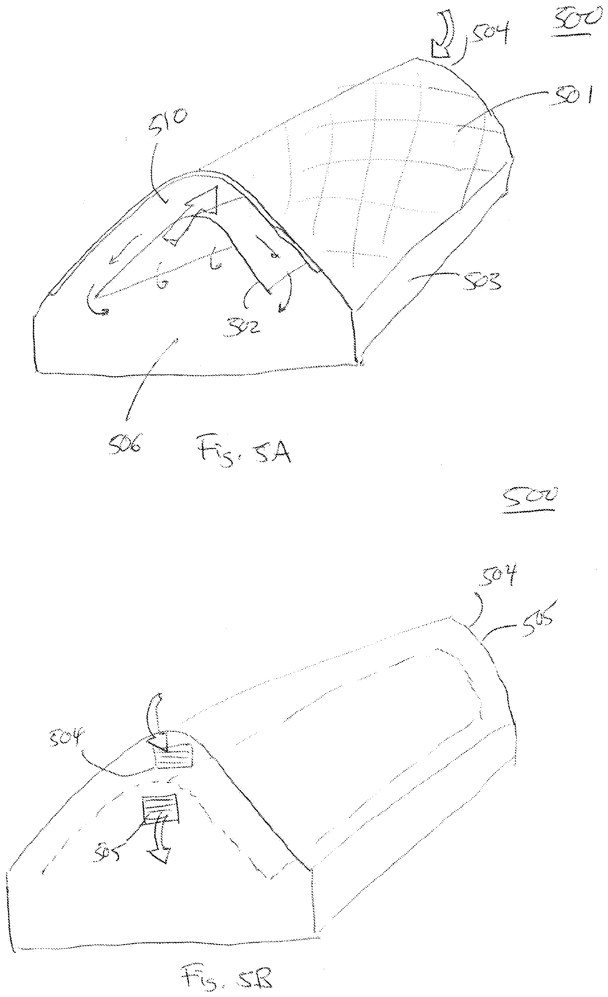

Figs. 5A and 5B depict an example of a temperature reducing assembly incorporated into a shelter. Fig. 5A shows a cross section cut through shelter 500 so that interior lower duct wall 502 is visible. NEM 501 is located on the roof of shelter 500. Air flows thru intake vent openings 504 into air transport duct 510. Air transport duct 510 is formed between the roof and inner duct wall 502 which sits within the shelter interior, displaced a small distance down from the roof. Inner duct wall 502 should be pulled taught when shelter 500 is erect to keep air transport duct 510 from collapsing, which would impede air flow. The construction details are not shown, but common techniques for stretching fabric walls taught are well known in the design and manufacture of tents.

Outside air enters duct 510 where it is gradually cooled by the cooling power provided by NEM 501 located on the shelter roof. As the air within duct 510 is cooled, it falls into the conditioned interior air space 506. This lowers air pressure within duct 510 which draws in additional outside air through vent openings 504 into duct 510.

Fig. 5B shows one end of the exterior of shelter 500 showing vent openings 504 and 505. Intake vent openings 504 are coupled to the airspace within duct 510. NEM 502 is depicted in dotted lines so its position relative to vent openings 504 and 505 can be seen, though it is not visible from outside of shelter 500. Vent openings 505 couple to interior conditioned air space and provide an air exit. Vents 505 are located higher up within the interior air space and are preferably coupled to the warmest regions within the interior air space. When cooler air falls out of duct 510 into the interior conditioned air space 506, relatively warmer located near the vent exits 505 flows out of the conditioned space, provided for fresh air exchange.

Sides 503 of shelter 500 may be insulated to have high thermal resistance, to minimize heat conducted from ambient environment thru the shelter walls into the shelter interior conditioned air space 506. As described earlier, sides 503 should also be reflective to solar irradiance, to minimize solar heating. Side walls 503 may also be made highly transparent for electromagnetic energy in the LWIR wavelength band.

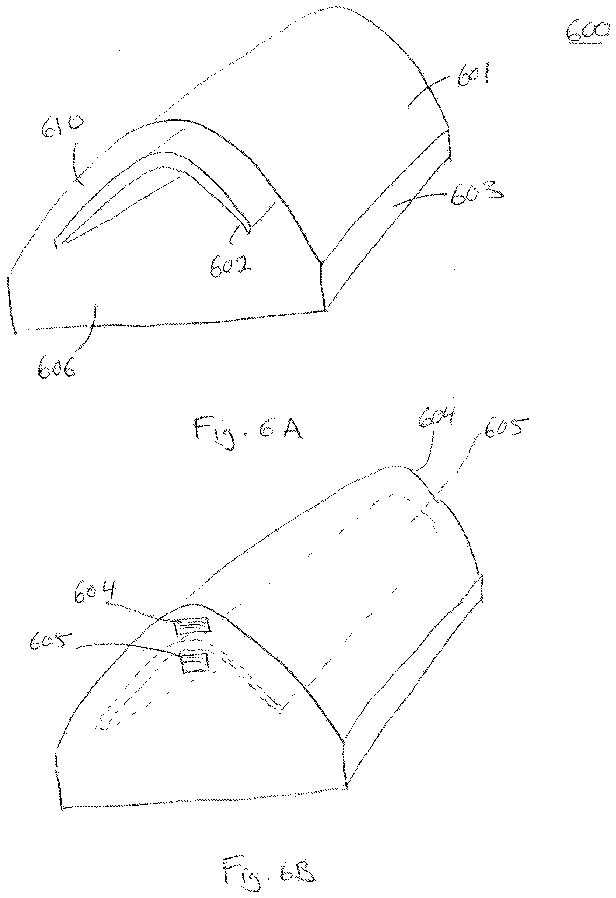

Figs. 6A and 6B depict one example of a shelter with a temperature reducing assembly incorporated therein. The only differences between shelter 600 and shelter 500 of Figs. 5A and 5B is that the location of the NEM has been swapped. In shelter 600, NEM 602 forms the inner duct wall, and the outer wall is also the roof 610. One side of NEM 602 faces into duct 610, and the other side faces into the interior conditioned space 606. No side of NEM 602 is directly exposed to the ambient environment. All of the available cooling power is directed towards air that it is desired to cool, and not to the ambient external environment. Cooling of air within duct 610 proceeds in the same manner as cooling of air in duct 510.

Roof 601 must not inhibit the cooling operation of NEM 602. If NEM 602 is emissive, roof 601 should be highly transmissive within the LWIR wavelength range. In general, it should have a transmissivity integrated over the 8 - 14µm wavelength band of at least 0.8, and preferable is greater than 0.9, and more preferable as high as is available. If NEM 602 is fluorescent, roof 601 should have high transmissivity within the narrow wavelength band for fluorescence.

It should also be noted that for all discussions of transmissivity, a transmissivity of 1.0 is perfect transmission where 100 % of the incident energy is transmitted through the material. Similarly, a reflectivity of 1.0 is perfect reflectivity, where 100% of the incident energy is reflected.

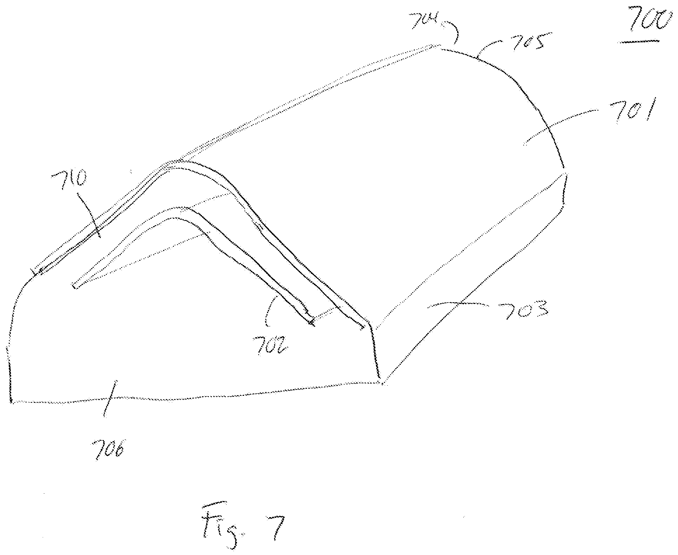

Fig. 7 depicts a shelter with an example temperature reducing assembly incorporated using a split function NEM. Roof 701 acts as a light control material and inner duct wall 702 acts as a net energy radiating material. Since it is the net energy radiating material that is primarily responsible for the cooling power, it is coupled into the shelter in a similar manner to NEM 602 of Fig. 6, and in general operates identically. The only difference in this case is that roof 701 may require some additional optical functionality not required from roof 601.

For an emissive NEM, roof 701 should be highly transmissive in the LWIR wavelength range and highly reflective in the visible and UV wavelength regions. Desirable transmissivity and reflectivity have been described elsewhere. In general, reflectivity should be as high as possible and transmissivity in the LWIR wavelength region should also be as high as possible.

For a fluorescent NEM, roof 701 should have a bandpass characteristic, where electromagnetic radiation within the narrow wavelength band for anti-stokes fluorescence is transmitted, and electromagnetic radiation in the visible and UV ranges outside of the fluorescence band is reflected.

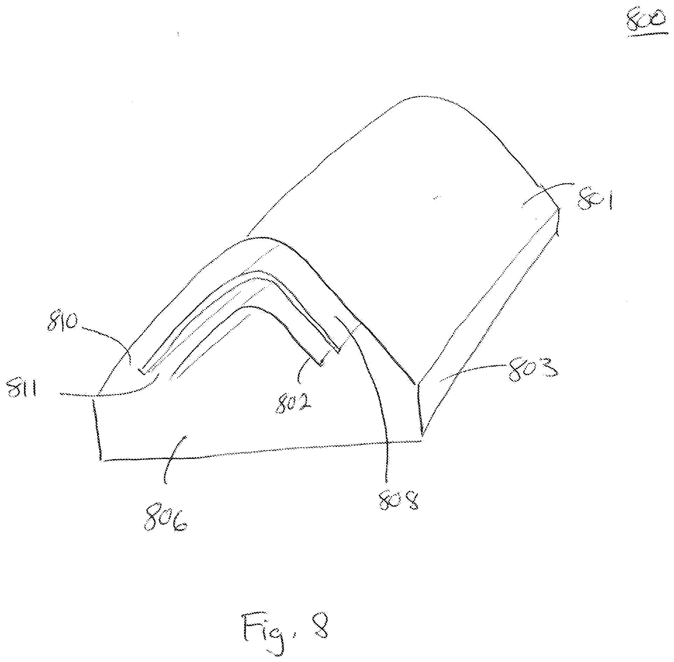

Fig. 8 depicts a shelter using the construction for a temperature reducing assembly shown in Fig. 3. This example functions in the same manner as the example depicted in Figs. 6A and 6B. The only difference is that the interior facing side NEM 808 faces into duct 811, rather than facing directly into the conditioned interior air space 806. This arrangement focusses the available cooling power into air within ducts 810 and 811, potentially making it possible to lower the temperature of air within the ducts further than might otherwise be possible, which could drive more convective flow.

There is benefit if duct wall materials are water impermeable. This can keep any condensation that may form on the inner surface of the NEM from dripping onto shelter occupants. Condensation channels (not shown) can be formed into the air transport ducts to direct condensation that may form away from shelter occupants. A fine mesh screen can be fit across the duct exit, to allow air flow but conduct liquid that runs down the duct interior wall to flow into a duct drip channel from which it can be transported outside. The drip channels may require small holes in the tent exterior (or patches of moisture wicking material) to conduct moisture out of the structure.

In some examples, it may be desirable to add a powered air mover if larger air flows are needed. A fan could be located either in vent intake openings or in vent exhaust openings, though having the fan located on the intake side can enhance heat transfer between the NEM and air within the air transport duct, as the flow rate over the cooling surface will be higher and can also be made more turbulent, helping to disrupt boundary layers along the duct walls that might inhibit heat transfer.

In some examples, additional vent openings can be formed in the duct to allow recirculation of internal air back through the cooling duct. By adjusting relative opening areas of external vents and internal recirculation vents, the balance between fresh air and recirculated air within the cooling duct can be adjusted.

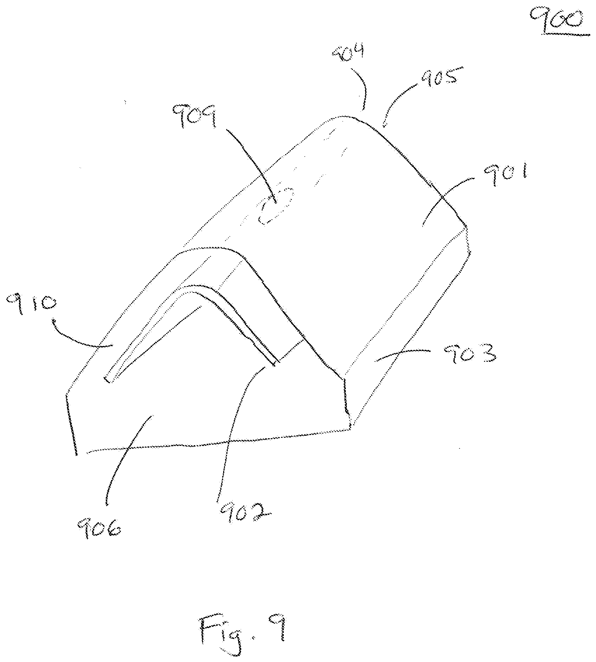

Fig. 9 depicts example shelter 900 incorporating a temperature reducing assembly using the arrangement depicted in Fig. 1, though adding air recirculation is possible with any of the temperature reducing examples disclosed herein. Shelter 900 couples an NEM to roof 901. Inner duct wall 902 is identical to inner duct wall 502, with the exception of added hole 909. Though only a single hole is shown, multiple holes can be provided if desired. Hole 909 couples the interior air space 906 into duct 910.

Warmed interior air rises towards the cooling duct recirculation vent opening. The lower pressure in duct 910 (due to denser, cooler duct air fallout out of the duct into conditioned space 906) draws in a combination of external ambient air (as before) through external intake vents 904 and warmer internal air though the recirculation vent 909. The relative amount of recirculated vs. fresh air drawn into the duct depends on the pressure differences across the various vent openings (fresh and recirculation air intake), and the relative areas of the openings. To first order the relative amount of fresh vs. recirculated air can be controlled by adjusting the relative vent opening areas. Providing an ability to adjust vent open areas is straightforward and can be included as part of the vent assemblies.

Fans mounted in the fresh and recirculation air intake vents may be used to control the proportion of fresh to recirculated flow by controlling flow rates of the various fans, as well as to enhance the total amount of air flow within and thru the shelter. Fresh air exchange can be controlled to make sure it always remains sufficient while recirculation flow is increased. Higher air flow over occupants improves convective heat transfer from the occupant to the moving air. If fans are used, the ability to vary intake vent area openings becomes unnecessary. The fans can be powered by small solar panel-based power supplies with battery backup so that no grid power is required (though they can use grid or locally generated power if available).

In some examples, it is desirable to not require any grid electric power in order to operate. Though powered air movers are mentioned above, the amount of air motion needed is small, and electrical power to drive the air movers can easily be supplied by an off grid, renewal power supply such as the previously mentioned solar cell coupled with battery backup.

It is possible to further improve overall system efficiency by using a more complex ventilation system. In energy efficient building construction where the building envelope is made tight to limit air leakage, external ventilation systems are often added. Rather than simply drawing in outside air and exhausting conditioned air, though, these systems perform a degree of energy recovery, using either an HRV (heat recovery ventilator) or ERV (energy recovery ventilator). These systems can also be used with example shelters disclosed herein.

Both HRV and ERV ventilation systems use a cross flow heat exchanger to passively transport heat between the incoming air stream and the exiting air stream. This can substantially reduce heat gain from ambient air exchange. Rather than simply exhausting conditioned interior air, the outgoing air flow is used to condition incoming ambient air before it enters the internal air space. Any reduction of the incoming air temperature accomplished by cooling it with outgoing air lessens the total cooling power needed to maintain the interior air space at a desired temperature.

A HRV controls heat flow through use of a crossflow heat exchanger. An ERV, in addition to controlling heat as in an HRV, can also transport water vapor from one air stream to the other allowing a measure of control over the humidity of an air space. Moisture in the warmer incoming air stream can be transferred to the exiting air stream so as not to increase humidity within the conditioned air space. Humidity control is discussed in more detail below. Both HRV's and ERV's are well known and are commercially available.

Ventilation systems, including HRV and ERV devices, only require power to move air. There is no active cooling or heating performed. Required airflow can be determined from standard HVAC calculations. ASHRE recommends 0.35 air changes per hour, but not less than 15 cubic feet of air per minute (cfm) per person. The power required to provide this flow depends on the pressure drop through the air supply and fan efficiency, but we estimate a ventilation system for example shelters will require a maximum of approx. 20 - 30W per person to provide adequate flow. A ballpark estimate for solar panel output power is approx. 20 W per sq ft. (this of course depends on the specific panel efficiency and the solar radiation falling on the panel). Since the power requirement is low, a portable solar panel plus rechargeable battery power supply can be conveniently sized to provide 24-hour power for a supplemental ventilation system. Should it be necessary (for example, due to extended periods of low solar radiation), portable generators can be available as a backup to charge batteries.

Any of the previous structures described using ducts can be designed to accommodate energy recovery ventilation systems. These devices can be sized to accommodate the specific shelter. Outside air would be drawn into the heat exchanger, conditioned by the outgoing air stream, before being input to the duct vent intakes. The conditioned air would flow into the duct, to be further cooled by the duct. Exiting exhaust air would be conducted from the warmest spot inside the conditioned space, which will in general be located higher up in the structure. The exact heigh that is optimal will also depend on how much direct cooling of the conditioned air space is provided by the NEM (i.e. cooling not provided by air flow thru the duct).

In another example, shelters are designed to house occupants in acute distress (who can be assumed to remain relatively stationary). In such shelters, individualized air exchange systems can be used. Air ducts can supply and exhaust air directly to/from the patient, without needing to interact with the larger interior air space volume. Since the interior space is not being used to support respiration of occupants, substantially lower air exchange rates are necessary for the larger air space, which will further reduce heating of the space due to incoming air.

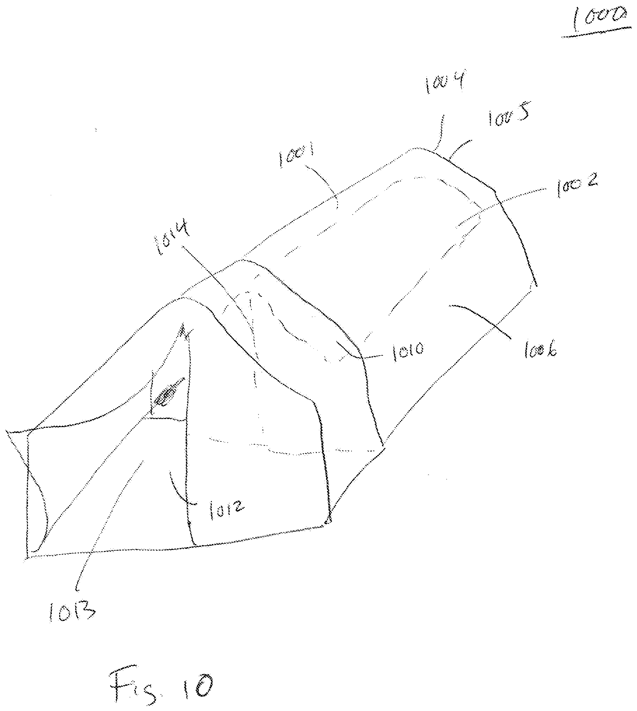

In another example depicted in Fig. 10, shelter 1000 incorporates a multi-door entryway. This reduces air exchange that would otherwise occur when individuals enter or exit the conditioned interior space of the shelter. An individual entering the structure would enter thru the outer door 1012 into the entryway 1013, with the inner door 1014 sealed. They would then seal the outer door 1013. Once the outer door 1013 was sealed, they would open the inner door 1014 and enter the interior air space 1006, then seal inner door 1014. The reverse process would be used when exiting the structure. Occupants would enter entryway 1013 thru door 1014, seal door 1014 behind them, then open door 1012 and exit the entryway 1013, finally closing door 1012 behind. Use of a multi-door entryway further reduces parasitic heating of the structure interior air space.

The roof of the entryway may but need not have an NEM applied. Since there are no permanent occupants of this portion of the structure, it is not required for it to employ net emissive material. However, since air within this chamber will be in communication with the interior conditioned air space, any cooling that can happen in this air space will reduce heat loads in the interior space, improving overall cooling. The entryway can use temperature reducing constructions as depicted in Figs 1 - 4. However, since this space is not permanently occupied, if may be sufficient to just place an NEM without and ducting structure. It also may be sufficient just to form the entryway roof and walls from highly reflective materials to reduce heat gain from absorbing solar radiation.

Passive cooling systems may be prone to condensation formation on the cool inner facing surface of the NEM's. Reducing humidity levels within the conditioned space is beneficial, as the efficiency of heat removal from the body via evaporation of perspiration increases as relative humidity levels decrease. Comfort of occupants also increases as humidity decreases. In some examples, a separate dehumidification system may be used. Use of conventional dehumidification systems is possible. A desiccant dehumidifier may be a more efficient solution than a vapor compression system if heating to recharge the desiccant can be done without adding heat back into the conditioned space. While separate dehumidification systems will consume power and will require a power source, carefully controlling the amount of air exchange will reduce total amount of humidity that needs to be removed, which will reduce power requirements. Any heat generating portion of a dehumidification system should be located outside of the conditioned space so as not to increase the heat load the NEM needs to remove. A separate dehumidification system can be combined with an HRV or ERV so that only a single fan is needed to move air. A substantial increase in overall comfort can be obtained by combining the passive cooling obtained through use of NEM's, with dehumidification, and the combination can substantially decrease the wet bulb temperature. Further efficiency can be obtained thru the use of ERV's or HRV's.

Passive cooling can be augmented by powered, supplemental cooling systems if necessary. It is possible that in certain conditions there may not be sufficient passive cooling power available to fully meet the needs of the situation. For example, available cooling power may be reduced due to heavy cloud cover reducing efficiency of radiative cooling. In other cases, more people may need to use an available shelter than can be cooled solely by the available passive cooling power. As the number of people in a shelter increases, the heat generated within the conditioned interior increases and may exceed the available passive cooling power.

In cases where passive cooling is insufficient, cooling can be augmented by active cooling means. In one example, a portable split vapor compression system can be used to augment passive cooling. Overall power requirements are still substantially lower than if no passive cooling were available as the active system only needs to augment passive cooling, not to provide all cooling power. The passive system is agnostic as regards the type of auxiliary cooling system used. An auxiliary cooling system that removed humidity from the interior air would eliminate the need for separate dehumidification.

Any of the example shelters disclosed herein may be used with HRV's, ERV's, external dehumidifiers or external air conditioners, either alone or in various combinations.

Structures can be designed so that their overall optical (and resulting cooling) properties can be varied easily in the field. For example, in some locations cooling may be needed during the day but not at night. The emissivity of NEM's can be easily altered by placing an LWIR reflective cover over the NEM. A similar cover that is reflective at least in the narrow wavelength band for anti-stokes fluorescence can be placed over a fluorescence type NEM to shut off its cooling effect. Also, as noted earlier, fluorescence type NEM's are not operative once the sun goes down as they are no longer excited by light in the fluorescent wavelength band.

Roof and walls sections that incorporate NEM's can be made removable and/or replaceable with materials that are not net emissive. This is useful when conditions are such that cooling is not needed (or desirable). The net emissive material can be rolled or folded up and left attached in place or removed and stored away.

It is common for tents to use a separate rain shield that is arranged to fit over the tent roof. The rain shield is fixed to the tent support structure and typically sits above the tent ceiling with a small gap separating the rain shield from the tent ceiling. Rain shields are easily attached and removed from the tent structure. If a proposed cooling structure is a tent with a rain shield, the rain shield would sit over the net emissive materials and its properties would affect overall cooling performance. Rain shields with different properties can be used to alter cooling performance.

In one example, two different rain shields can be supplied. A first rain shield is designed to act just as a rain shield and not otherwise alter cooling behavior of the NEM. It provides extra protection from rain but allows cooling to occur. This shield should be transparent to IR radiation within the atmospheric window, or transparent to electromagnetic radiation within the narrow fluorescence wavelength band for anti-stokes materials. It can also be transparent to solar radiation, or it can be highly reflective. This first rain shield can also be used as a convective barrier to keep ambient air from flowing over the net emissive material surface if edges of the rain shield are allowed to make contact with the outer surface of the tent roof. For example, Velcro strips could be used to adhere edges of the rain shield to the tent surface, to block convective air flow from reaching the outer surface of the net emissive material.

A second rain shield can be swapped with the first rain shield, where the second shield is designed to block the cooling effect for those times when cooling is not needed. There are numerous ways to make a surface such as a rain shield IR reflective. In one example, a rain shield can be modified by adding a layer or coating (ideally to the side of the shield that faces the net emissive material though this is not strictly required) to make the rain shield IR reflective. For example, a metalized film layer or an IR reflective coating can be applied to the underside of the rain shield. Placing an IR reflective rain shield over the net emissive material will shut off the radiative cooling effect.

It should be noted that many of the materials described that are useful as NEM's or as a light control material for NEM's, which can be located on the roof and face outward to the environment, are formed from materials that are inherently hydrophobic. In some examples, these materials may be sufficiently water repellant to remove the need for a separate rain shield.

Candidate NEM's must be compatible with an outdoor shelter application (for example, a tent). Materials must accommodate being rolled/folded up for storage and easily set up when needed. Materials must be robust physically and environmentally, easily cleaned, and have sufficient performance for a practical application.

In various applications, it may be desirable to use both an emissive and a fluorescent NEM in combination. In a parallel combination, different portions of a shelter roof (or other large area structure) can use different NEM's. For example, a side of a room that is more directly exposed to the sun may benefit form using a fluorescent type NEM. The stringer the narrow band fluorescent light input, the greater the cooling benefit. Emissive type NEM's need a view of the sky, but benefit if they do not receive direct solar irradiance. In one example of a shelter, the fluorescent type NEM is arrange on a southern facing side of the roof and an emissive type NEM is used on a northern facing side. In the parallel, any emissive and fluorescent NEM's can be used.

In another combination, different types of NEM's can be used in series. In this arrangement, an emissive type NEM that is transparent in at least the narrow band fluorescent wavelength band is placed in front of a fluorescent type NEM. It is difficult to construct an emissive NEM that is reflective in the visible and UV range everywhere except in the narrow fluorescent band, and is also emissive in the LWIR, though such a material if available could be used. However, there is another option and is described below.

One example of an emissive NEM material is a TPX polymer film (other low loss polymers are also possible) with embedded SiO₂ micro spheres (other micro elements are possible) and a silver reflective backing (other coatings can provide sufficient reflectivity as well). This material is described in: "Scalable-manufactured randomized glass-polymer hybrid metamaterial for daytime radiative cooling", by Yao Zhai, Yaoguang Ma, Sabrina N. David, Dongliang Zhao, Runnan Lou, Gang Tan, Ronggui Yang, Xiaobo Yin. Science 355, 1062-1066 (2017) 10 March 2017. This material can be effectively used as an NEM in various applications.

In general, a class of meta-materials can be formed as a base polymer film incorporating additional material used to alter the optical properties of the meta-material. This class of meta-material has many favorable properties for a temporary shelter application, though some mechanical reinforcement of the material may be needed. In one example, an open weave tough fabric layer is laminated to the net emissive material.

In one example, the TPX film with embedded SiO₂ microspheres can be used without the silver reflective backing. This provides a material that is generally transparent (low absorption and low reflection over the visible wavelength region) but is highly emissive over the LWIR wavelength region. Such a material can be used in combination with a fluorescent type NEM, where both cooling processes can be taken advantage simultaneously. This material can be sued in front of a fluorescent type NEM, and the cooling power of both surfaces canb be directly used. Such a material combination can be used anywhere a passive cooling material is used, it is not restricted to use in the cooling ducts described elsewhere.

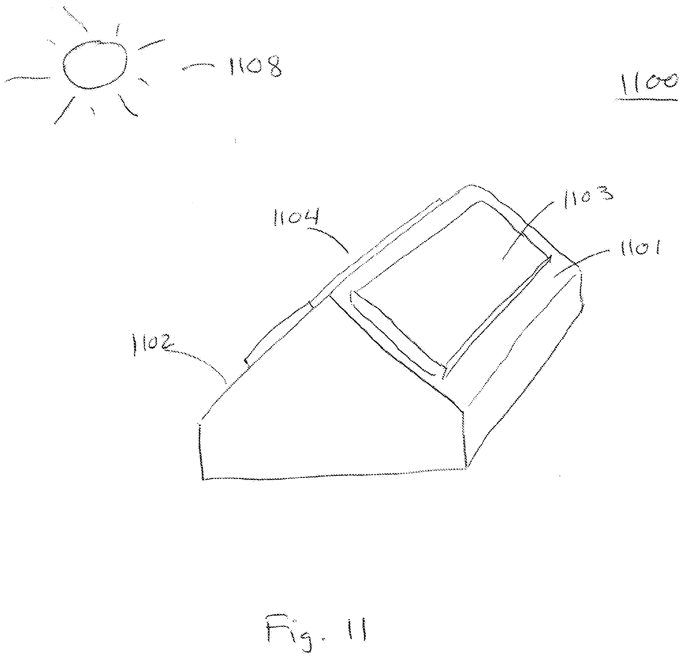

Fig. 11 depicts a parallel combination of NEM materials used on a shelter 1100. NEM 1103 on roof portion 1101 faces away from sun1108 and is of an emissive type. NEM 1104 sits on roof section 1102 and more directly faces sun 1108 and is of a fluorescent type. Though no ducts are shown in shelter 1100, all of the various duct constructions and shelter configurations described previously can accommodate use of two different types of NEM's on the same shelter. Split type NEM's are also contemplated for use here and will provide the same benefits as described earlier.

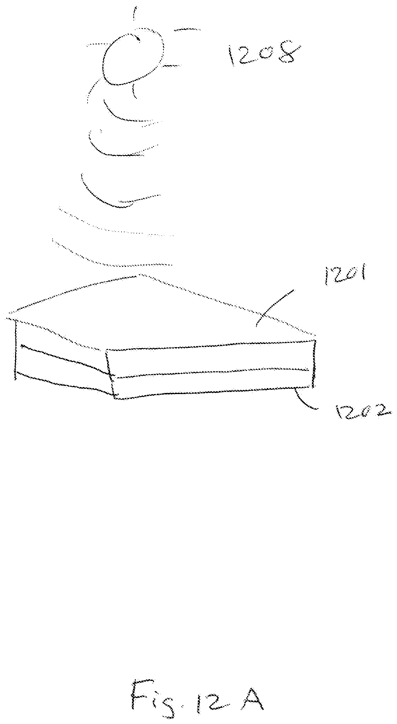

Fig. 12A depicts a series stacked arrangement of NEM's. NEM 1201 is shown sitting between the sun and NEM 1202. NEM 1201 is an emissive type NEM that is transmissive in the visible range, including in the narrow wavelength band for anti-stokes fluorescence. This NEM can be of the form disclosed in the "Scalable-manufactured randomized glass-polymer hybrid metamaterial for daytime radiative cooling" paper referenced earlier. In this case, the silver backing is omitted to allow light in the fluorescence band to pass through so it can reach NEM 1202. NEM 1202 is of the fluorescence type, such as the NEM's available from Solcold which were referenced earlier. Since two different mechanisms of passive cooling are operative here, the stacked result will exceed that of either NEM alone. This stacked NEM can also be used as an NEM in any of the previously described examples.

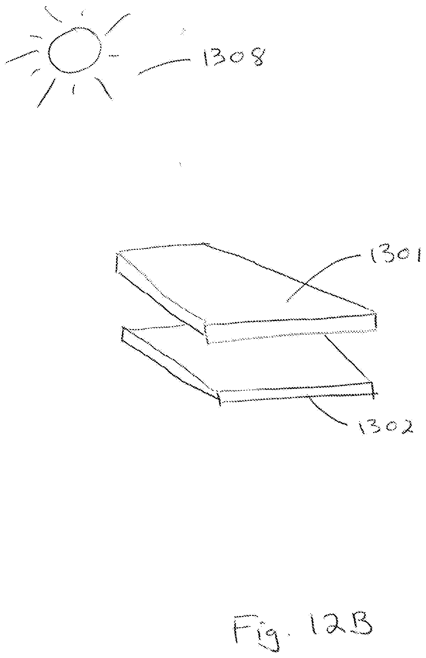

Fig. 12B depicts another series arrangement, similar to that of Fig. 12 A, except that in this arrangement some method is used to separate the two NEM's. They are still in series. The benefit to this arrangement is that the amount of energy emitted by emissive NEM 1301 depends on its temperature. When NEM 1201 was in contact with NEM 1202, its temperature can be reduced, which will reduce the effectiveness of its radiative cooling. By spacing the NEM's apart, the cooling power of NEM 1301 can be improved, especially if air to be cooled is flowed in between NEM 1301 and 1302. This arrangement lends itself to all of the duct arrangements previously disclosed.

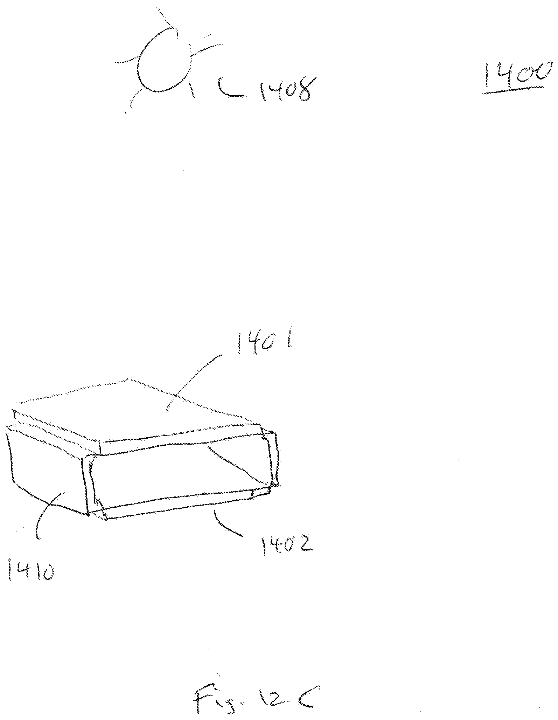

Fig. 12C depicts the arrangement of Fig. 12B with NEM's coupled to an air transport duct. Visibly transparent LWIR emissive NEM 1401 is coupled to one wall of air transport duct 1410 and fluorescent type NEM 1402 is coupled to an opposite wall of air transport duct 1410, providing a series arrangement of dissimilar NEM's. Duct 1410 is shown with an orientation where the side wall with coupled emissive NEM 1401 faces towards the sun, so solar radiation in the narrow wavelength band for fluorescence used by the fluorescent NEM 1402 must pass through the emissive NEM 1401 before reaching the fluorescent NEM. 1402.

The presence of heat sources within the shelter interior conditioned air space will transport heat into the air space, causing temperature within the interior air space to rise. Occupants of the cooling shelter are heat sources as individuals generate heat due to their metabolic functions. At rest, metabolic power output is on the order of 100W per individual. To first order, solely to remove heat generated by individuals within the shelter (not considering any parasitic heating effects), we anticipate approx. 1-2m ² of net emissive material is needed per person (where we assume 50 and 100 W/m² of cooling power is available from the NEM). The number of occupants needs to be controlled so as not to exceed available cooling power. Occupants of the shelter should also remain sedentary as exertion increases metabolic rate and heat generation. No other heat sources should be located within the shelter. Any light sources in the structure should be high-efficient LED lights. Other power dissipating devices should not be located within the shelter (TV's, computers, etc.) if cooling is to be maximized.

We assume an additional 1-2 m² of NEM is needed to compensate for parasitic heating that may occur. If parasitic heat sources are sufficiently controlled, less area of net emissive material will be needed. Therefore, a reasonable shelter design would incorporate between 2 and 4 m² of NEM for each planned occupant of a structure. A typical 4-person tent has a floor about 9' x 7'. Though exact calculation of roof area is difficult, it should be approx. 8 m². A roof made from net emissive material will then provide enough area to generate cooling power sufficient to support at least two individuals.

A DOE rule of thumb states 20 BTU's (5.86 W*hr) of cooling power are needed to cool each sq. ft. of building space (considering typical home construction). A typical 4-person tent has approx. 60 sq. ft (5.6 m²). Using the rule of thumb, 1200 BTU (0.35 kW*hr) should be sufficient to cool the space. Using a midrange estimate of 75 W of cooling power/m² for an NEM and use of 4 m² of NEM to cool 2 persons, approx. 1194 BTU's (0.34 kW*hr) of cooling power will be available from the NEM, meeting the DOE's estimate. When operating efficiently and with proper control of parasitic heat flows, a passive, radiative cooled structure should function adequately.

Designs also easily scale up in size. A nominal 8-person tent with a floor area of approx. 11 m² should provide enough roof area to accommodate sufficient NEM material to cool up to 5 occupants. As tents get larger, the location of occupants within the tent will move away from tent side walls where the duct exits were shown to be located. In these implementations, the duct design may need to change to alter where cooling flows are located, to maximize cooling of individuals. Additional duct openings can be provided, or end deflectors can be added to flow cooled air over locations closer to the middle portions of a larger tent. Alternatively, larger tents may benefit from the addition of forced ventilation to direct cooling flows more evenly over the occupied areas.

Adding a passive cooling ability to a camping tent will be an attractive feature for any tent used in high heat conditions. Net emissive materials are compatible with tents as the materials can be robust mechanically and environmentally, relatively low mass and cost effective.

The usage conditions for a camping tent are quite variable. The same tent may be used to camp in a desert in the summer and the mountains in winter. In one example, a tent has roof and/or wall surface where the net emissive behavior can be altered in some manner.

In one example, a tent can be supplied with a pair of removable and replaceable rain shields for fitting over net emissive material in the tent roof. A first shield is transparent to IR, in at least the majority of the atmospheric window, so as not to impact passive cooling. A second rain shield is reflective for IR in at least the atmospheric window spectral region. By switching back and forth between the first and second rain shields, the cooling behavior of the tent can effectively be "turned on" and "turned off". If an individual did not wish to transport two rain shields, they could still be able to "turn on" and "turn off" cooling using just the IR reflective rain shield, by either using a rain shield or not using the rain shield. Using the IR reflective rain shield "turns off" cooling and removing the IR reflective rain shield "turns on" cooling (but without the benefit of extra rain protection provided by the rain shield).

A camping tent can incorporate any of the various ducting arrangements described earlier, and can also be used with any powered ventilation, dehumidification or auxiliary cooling system if a source of electrical power is available.

Net emissive materials can be relatively cost effective to incorporate into a tent. A coating based net emissive material will be straightforward to apply, and materials can be formed from inexpensive base materials using standard processing techniques. Similarly, film based meta-materials incorporating additives to provide optical properties, such as SiO2 micro spheres, also use inexpensive base materials and standard manufacturing processes. Porous polymer films should also be cost effective to produce.

Convective cooling of occupants is enhanced when the cooled flow impinges directly on the occupants before it impinges on other objects or mixes with ambient air. This increases the temperature difference between the air flow impinging on occupants and the occupant surface temperature, which increases the convective heat transfer coefficient. The duct can be formed and located so that the duct exit(s) sit directly over the occupants. This minimizes parasitic heating of the air flow prior to it reaching the occupants.

It is desirable that air flows in the proper direction. In particular, external ambient air should not flow into the interior through the exhaust vents. Vent flaps can be added to provide preferential flow directions and minimize reverse flows. Vent openings should also be screened to keep insects out. The addition of screened vent flaps is compatible with standard tent manufacturing processes.

Air flows should not be disrupted by wind, and rain needs to be kept out of the cooling duct. A wind deflector can be placed over exterior vent openings to keep wind from directly impinging on the vents and also keep rain from entering. Wind deflectors can be combined with screen and flaps to form exterior vent assemblies.

Since the structures will be tied to the ground, conductive heat transfer from the ground to the structure floor should be considered. Typically, the ground surface temperature tracks the ambient air temperature, though this can vary with the surface and what type of vegetation is present. If the ground temperature is lower than an occupant's body surface temperature, it may be beneficial to provide a low thermal resistance interface between the occupant(s) and the ground, to increase conducted heat transfer from their bodies to the ground. If the ground temperature is higher than the occupant's body surface temperature, the floor should be made thermally insulating.

Various floor covering materials can be used as needed. An occupant can rest on a thermally conductive gel pad when low thermal resistance is desired. Thermally insulating blankets can be placed on the floor if high thermal resistance is desired.

Setup and take down for a 4-person tent (providing cooling for two people in use cases 1 or 2) should be essentially identical to that of existing camping tents. Larger temporary structures may be more involved to set up and tear down, but not any more difficult that traditional temporary structures of the same size. The duct structures and NEM materials may add between 3 and 4 lbs. of additional weight to a std. 4 -man tent. Tents larger than nominal 8 person (5 people cooled) can become somewhat more cumbersome to move, but still are very easy to transport and do not take up much room when collapsed.

Tents can be easily and quickly be arranged together over a specified area to accommodate large numbers of displaced persons and families. An 8-person size can accommodate a family of 4 along with some belongings inside, and external storage for other personal items can be provided. Larger structures can be erected for community functions such as gatherings, providing meals, etc. The larger structures may also use powered means to provide enhanced cooling, but with reduced electrical power requirements due to the cooling power provided by use of NEM material.

A number of implementations have been described. Nevertheless, it will be understood that additional modifications may be made without departing from the scope of the following claims.

## Claims

1. A temperature reducing assembly for generating free convective air flow comprising an air transport duct, the air transport duct having a cross-sectional area and a length from a first end to a second end, the cross section generally having a width and a depth, the air transport duct further comprising first and second openings and at least one duct wall that extends between the first end and the second end,
wherein the temperature reducing assembly further comprises a passive cooling material assembly;
**characterized in that**
the passive cooling material assembly is capable of generating a cooling power useful for cooling its surroundings while exposed to solar irradiation, without the provision of external electrical power,
wherein the passive cooling material assembly possesses a first light controlling property and a first net energy radiating property,
wherein the passive cooling material assembly comprises at least a portion of the at least one duct wall,
wherein air enters the air transport duct through the first opening for cooling by the passive cooling material assembly, and
wherein air cooled by the passive cooling material assembly exits the air transport duct through the second opening.

2. The temperature reducing assembly of claim 1 wherein the temperature reducing assembly is constructed and arranged so that it can be oriented with respect to gravity to facilitate free convective air flow from the first opening to the second opening

3. The temperature reducing assembly of claim 1 wherein the first light controlling property comprises a net reflectivity to incident electromagnetic energy, integrated over the 200 - 800 nm wavelength region of the solar irradiance spectrum, of greater than 80% and the first net energy radiating property comprises a net emissivity for electromagnetic radiation, integrated over the 8 - 14µm wavelength band, of greater than 0.7.

4. The temperature reducing assembly of any of claims 1 thru 3 wherein the first light controlling property is provided by a first light controlling material and the first net energy radiating property is provided by a separate, first net energy radiating material,
wherein the first light controlling material comprises at least a first portion of the at least one duct wall and the first net energy radiating material comprises at least a second portion of the at least one duct wall,
wherein the first portion of the at least one duct wall is located generally opposite the second portion of the at least one duct wall such that air flowing within the air transport duct flows between the first light controlling material and the first net energy radiating material.

5. The temperature reducing assembly of claim 4 wherein the first light controlling material possesses a second light control property,
wherein the second light control property comprises a net transmissibility for incident electromagnetic energy, integrated over the 8 - 14 µm wavelength atmospheric window, of greater than 70%.

6. The temperature reducing assembly of any of claims 1 thru 3 wherein both the first light controlling property and the first net energy radiating properties are provided by a first light controlling and net energy radiating material,
wherein the temperature reducing assembly further comprises a light transmission material, wherein the light transmission material possesses a second light controlling property comprising a net transmissibility for incident electromagnetic energy, integrated over the 8 - 14 µm wavelength atmospheric window, of greater than 70%.
wherein the light transmission material comprises at least a first portion of the at least one duct wall and the first net energy radiating material comprises at least a second portion of the at least one duct wall,
wherein the first portion of the at least one duct wall is located generally opposite the second portion of the at least one duct wall such that air flowing within the air transport duct flows between the light transmission material and the first light controlling and net energy radiating material.

7. The temperature reducing assembly of claim 6 wherein the light transmission material comprises polyethylene or a hydrogenated and cross-linked polynorbornene.

8. The temperature reducing assembly of any of claims 1 thru 5 wherein the first light control property is provided by a porous polymer material or a nonwoven fiber membrane.

9. The temperature reducing assembly of any of claims 1 thru 8 wherein the temperature reducing assembly is located in a roof of an occupant shelter such that the first opening is coupled to the ambient environment outside of the occupant shelter and the second opening is coupled to an interior conditioned space of the occupant shelter.

10. The temperature reducing assembly of claim 1 wherein the passive cooling material assembly comprises a coating that is applied to at least a portion of the at least one wall of the air transport duct,
wherein the coating provides both the light controlling property and the net energy radiating property.

11. The temperature reducing assembly of claim 1
wherein the air transport duct further comprises a center wall that lengthwise bisects the air transport duct,
wherein the passive cooling material assembly comprises at least a portion of the center wall,
wherein air flowing within the air transport duct can flow over first and second outer surfaces of the center wall.

12. A method for generating free convective air flow with a temperature reducing assembly comprising the steps of:
constraining the flow of air with an air transport duct, the air transport duct having a cross section that extends over a length from a first end to a second end of the air transport duct, the air transport duct further comprising first and second openings in the first and second ends respectively, wherein at least one wall is between the first and second ends,
wherein air within the air transport duct is cooled by a passive cooling assembly,
**characterized in that**
the passive cooling assembly is capable of providing cooling power for cooling its surroundings while exposed to solar irradiation without provision of external electrical power,
flowing air into the air transport duct through the first opening to be cooled by the passive cooling material assembly,
flowing cooled air out of the air transport duct through the second opening.

13. The temperature reducing assembly of claims 1 or 2, wherein the passive cooling material assembly comprises a first net energy emissive material,
wherein the first net energy emissive material is an anti-Stokes fluorescent type net emissive material.

14. The temperature reducing assembly of claim 13 wherein the passive cooling material assembly further comprises a second net energy emissive material,
wherein the second net energy emissive material is an emissive type net energy emissive material, the second net energy emissive material having a transmissibility of greater that 70% in a wavelength range for which the first net energy emissive material exhibits anti-Stokes fluorescence.

15. The temperature reducing assembly of any of claims 1 - 14 comprising a powered air mover coupled to one of the first and second openings, to increase air flow through the air transport duct.

## Patentansprüche

1. Temperatursenkungsbaugruppe zum Erzeugen eines freien Konvektionsluftstroms, umfassend einen Lufttransportkanal, wobei der Lufttransportkanal eine Querschnittsfläche und eine Länge von einem ersten Ende zu einem zweiten Ende aufweist, wobei der Querschnitt im Allgemeinen eine Breite und eine Tiefe aufweist, wobei der Lufttransportkanal ferner eine erste und eine zweite Öffnung und mindestens eine Kanalwand umfasst, die sich zwischen dem ersten Ende und dem zweiten Ende erstreckt, wobei die Temperatursenkungsbaugruppe ferner eine passive Kühlmaterialbaugruppe umfasst;
**dadurch gekennzeichnet, dass**
die passive Kühlmaterialbaugruppe in der Lage ist, bei Einwirkung von Sonneneinstrahlung ohne Bereitstellung externer elektrischer Leistung eine Kühlleistung zu erzeugen, die zum Kühlen ihrer Umgebung verwendbar ist, wobei die passive Kühlmaterialbaugruppe eine erste Lichtsteuerungseigenschaft und eine erste Nettoenergieabstrahlungseigenschaft besitzt,
wobei die passive Kühlmaterialbaugruppe mindestens einen Abschnitt der mindestens einen Kanalwand umfasst,
wobei Luft zur Kühlung durch die passive Kühlmaterialbaugruppe durch die erste Öffnung in den Lufttransportkanal eintritt und
wobei durch die passive Kühlmaterialbaugruppe gekühlte Luft den Lufttransportkanal durch die zweite Öffnung verlässt.

2. Temperatursenkungsbaugruppe nach Anspruch 1, wobei die Temperatursenkungsbaugruppe so konstruiert und ausgelegt ist, dass sie in Bezug auf die Schwerkraft ausgerichtet werden kann, um freien Konvektionsluftstrom von der ersten Öffnung zu der zweiten Öffnung zu ermöglichen.

3. Temperatursenkungsbaugruppe nach Anspruch 1, wobei die erste Lichtsteuerungseigenschaft eine Nettoreflektivität gegenüber einfallender elektromagnetischer Energie, integriert über den Wellenlängenbereich von 200-800 nm des Sonnenstrahlungsspektrums, von mehr als 80 % umfasst und die erste Nettoenergieabstrahlungseigenschaft eine Nettoemissivität für elektromagnetische Strahlung, integriert über das Wellenlängenband von 8-14 µm, von mehr als 0,7 umfasst.

4. Temperatursenkungsbaugruppe nach einem der Ansprüche 1 bis 3, wobei die erste Lichtsteuerungseigenschaft durch ein erstes Lichtsteuerungsmaterial bereitgestellt wird und die erste Nettoenergieabstrahlungseigenschaft durch ein separates erstes Nettoenergieabstrahlungsmaterial bereitgestellt wird,
wobei das erste Lichtsteuerungsmaterial mindestens einen ersten Abschnitt der mindestens einen Kanalwand umfasst und das erste Nettoenergieabstrahlungsmaterial mindestens einen zweiten Abschnitt der mindestens einen Kanalwand umfasst,
wobei sich der erste Abschnitt der mindestens einen Kanalwand im Allgemeinen gegenüber dem zweiten Abschnitt der mindestens einen Kanalwand befindet, sodass Luft, die innerhalb des Lufttransportkanals strömt, zwischen dem ersten Lichtsteuerungsmaterial und dem ersten Nettoenergieabstrahlungsmaterial strömt.

5. Temperatursenkungsbaugruppe nach Anspruch 4, wobei das erste Lichtsteuerungsmaterial eine zweite Lichtsteuerungseigenschaft besitzt,
wobei die zweite Lichtsteuerungseigenschaft eine Nettotransmissibilität für einfallende elektromagnetische Energie, integriert über das atmosphärische Wellenlängenfenster von 8-14 µm, von mehr als 70 % umfasst.

6. Temperatursenkungsbaugruppe nach einem der Ansprüche 1 bis 3, wobei sowohl die erste Lichtsteuerungseigenschaft als auch die erste Nettoenergieabstrahlungseigenschaft durch ein erstes Lichtsteuerungs- und Nettoenergieabstrahlungsmaterial bereitgestellt werden,
wobei die Temperatursenkungsbaugruppe ferner ein Lichtdurchlässigkeitsmaterial umfasst, wobei das Lichtdurchlässigkeitsmaterial eine zweite Lichtsteuerungseigenschaft besitzt, die eine Nettotransmissibilität für einfallende elektromagnetische Energie, integriert über das atmosphärische Wellenlängenfenster von 8-14 µm, von mehr als 70 % umfasst,
wobei das Lichtdurchlässigkeitsmaterial mindestens einen ersten Abschnitt der mindestens einen Kanalwand umfasst und das erste Nettoenergieabstrahlungsmaterial mindestens einen zweiten Abschnitt der mindestens einen Kanalwand umfasst,
wobei sich der erste Abschnitt der mindestens einen Kanalwand im Allgemeinen gegenüber dem zweiten Abschnitt der mindestens einen Kanalwand befindet, sodass Luft, die innerhalb des Lufttransportkanals strömt, zwischen dem Lichtdurchlässigkeitsmaterial und dem ersten Lichtsteuerungs- und Nettoenergieabstrahlungsmaterial strömt.

7. Temperatursenkungsbaugruppe nach Anspruch 6, wobei das Lichtdurchlässigkeitsmaterial Polyethylen oder ein hydriertes und vernetztes Polynorbornen umfasst.

8. Temperatursenkungsbaugruppe nach einem der Ansprüche 1 bis 5, wobei die erste Lichtsteuerungseigenschaft durch ein poröses Polymermaterial oder eine Vliesfasermembran bereitgestellt wird.

9. Temperatursenkungsbaugruppe nach einem der Ansprüche 1 bis 8, wobei sich die Temperatursenkungsbaugruppe in einem Dach eines Bewohnerschutzraums befindet, sodass die erste Öffnung mit der Außenumgebung außerhalb des Bewohnerschutzraums gekoppelt ist und die zweite Öffnung mit einem klimatisierten Innenraum des Bewohnerschutzraums gekoppelt ist.

10. Temperatursenkungsbaugruppe nach Anspruch 1, wobei die passive Kühlmaterialbaugruppe eine Beschichtung umfasst, die auf mindestens einen Abschnitt der mindestens einen Wand des Lufttransportkanals aufgebracht ist,
wobei die Beschichtung sowohl die Lichtsteuerungseigenschaft als auch die Nettoenergieabstrahlungseigenschaft bereitstellt.

11. Temperatursenkungsbaugruppe nach Anspruch 1,
wobei der Lufttransportkanal ferner eine Mittelwand umfasst, die den Lufttransportkanal in Längsrichtung halbiert,
wobei die passive Kühlmaterialbaugruppe mindestens einen Abschnitt der Mittelwand umfasst,
wobei Luft, die innerhalb des Lufttransportkanals strömt, über eine erste und eine zweite Außenfläche der Mittelwand strömen kann.

12. Verfahren zur Erzeugung eines freien Konvektionsluftstroms mit einer Temperatursenkungsbaugruppe, umfassend die folgenden Schritte:
Beschränken des Luftstroms mit einem Lufttransportkanal, wobei der Lufttransportkanal einen Querschnitt aufweist, der sich über eine Länge von einem ersten Ende zu einem zweiten Ende des Lufttransportkanals erstreckt, wobei der Lufttransportkanal ferner eine erste und eine zweite Öffnung in dem ersten bzw. dem zweiten Ende umfasst, wobei sich mindestens eine Wand zwischen dem ersten und dem zweiten Ende befindet,
wobei Luft innerhalb des Lufttransportkanals durch eine passive Kühlbaugruppe gekühlt wird,
**dadurch gekennzeichnet, dass**
die passive Kühlbaugruppe in der Lage ist, bei Einwirkung von Sonneneinstrahlung ohne Bereitstellung externer elektrischer Leistung Kühlleistung zum Kühlen ihrer Umgebung bereitzustellen,
Strömenlassen von Luft zur Kühlung durch die passive Kühlmaterialbaugruppe durch die erste Öffnung in den Lufttransportkanal,
Strömenlassen gekühlter Luft durch die zweite Öffnung aus dem Lufttransportkanal.

13. Temperatursenkungsbaugruppe nach Anspruch 1 oder 2, wobei die passive Kühlmaterialbaugruppe ein erstes Nettoenergieemissionsmaterial umfasst,
wobei das erste Nettoenergieemissionsmaterial ein Anti-Stokes-Fluoreszenz-Nettoemissionsmaterial ist.

14. Temperatursenkungsbaugruppe nach Anspruch 13, wobei die passive Kühlmaterialbaugruppe ferner ein zweites Nettoenergieemissionsmaterial umfasst,
wobei das zweite Nettoenergieemissionsmaterial ein Nettoenergieemissionsmaterial vom Emissionstyp ist, wobei das zweite Nettoenergieemissionsmaterial eine Transmissibilität von mehr als 70 % in einem Wellenlängenbereich aufweist, für den das erste Nettoenergieemissionsmaterial Anti-Stokes-Fluoreszenz aufweist.

15. Temperatursenkungsbaugruppe nach einem der Ansprüche 1-14, umfassend eine angetriebene Luftbewegungseinrichtung, die mit einer von der ersten und der zweiten Öffnungen gekoppelt ist, um den Luftstrom durch den Lufttransportkanal zu erhöhen.

## Revendications

1. Ensemble de réduction de la température destiné à générer un écoulement d'air convectif libre comprenant un conduit de transport d'air, le conduit de transport d'air ayant une aire de section transversale et une longueur mesurée d'une première extrémité à une deuxième extrémité, la section transversale ayant généralement une largeur et une profondeur, le conduit de transport d'air comprenant en outre une première et une deuxième ouverture et au moins une paroi de conduit qui s'étend entre la première extrémité et la deuxième extrémité, l'ensemble de réduction de la température comprenant en outre un ensemble de matériaux de refroidissement passif ;
**caractérisé en ce que**
l'ensemble de matériaux de refroidissement passif peut générer une énergie de refroidissement utile pour refroidir son environnement lorsqu'il est exposé au rayonnement solaire, sans nécessiter d'énergie électrique externe,
dans lequel l'ensemble de matériaux de refroidissement passif possède une première propriété de contrôle de la lumière et une première propriété de rayonnement d'énergie nette,
dans lequel l'ensemble de matériaux de refroidissement passif constitue au moins une partie de l'au moins une paroi de conduit,
dans lequel l'air entre dans le conduit de transport d'air par la première ouverture pour être refroidi par l'ensemble de matériaux de refroidissement passif, et dans lequel l'air refroidi par l'ensemble de matériaux de refroidissement passif sort du conduit de transport d'air par la deuxième ouverture.

2. Ensemble de réduction de la température de la revendication 1, l'ensemble de réduction de la température étant construit et agencé de telle sorte qu'il peut être orienté par rapport à la gravité pour faciliter un écoulement d'air convectif libre de la première ouverture à la deuxième ouverture.

3. Ensemble de réduction de la température de la revendication 1 dans lequel la première propriété de contrôle de la lumière comprend une réflectivité nette de l'énergie électromagnétique incidente, intégrée sur la région de longueurs d'onde de 200-800 nm du spectre d'irradiance solaire, supérieure à 80 %, et la première propriété de rayonnement d'énergie nette comprend une émissivité nette pour le rayonnement électromagnétique, intégrée sur la bande de longueurs d'onde de 8-14 µm, supérieure à 0,7.

4. Ensemble de réduction de la température de l'une quelconque des revendications 1 à 3 dans lequel la première propriété de contrôle de la lumière est fournie par un premier matériau contrôlant la lumière et la première propriété de rayonnement d'énergie nette est fournie par un premier matériau rayonnant une énergie nette distinct,
le premier matériau contrôlant la lumière constituant au moins une première partie de l'au moins une paroi de conduit et le premier matériau rayonnant une énergie nette constituant au moins une deuxième partie de l'au moins une paroi de conduit,
la première partie de l'au moins une paroi de conduit se situant généralement en face de la deuxième partie de l'au moins une paroi de conduit, de sorte que l'air s'écoulant à l'intérieur du conduit de transport d'air s'écoule entre le premier matériau contrôlant la lumière et le premier matériau rayonnant une énergie nette.

5. Ensemble de réduction de la température de la revendication 4 dans lequel le premier matériau contrôlant la lumière possède une deuxième propriété de contrôle de la lumière,
la deuxième propriété de contrôle de la lumière comprenant une transmissibilité nette pour l'énergie électromagnétique incidente, intégrée sur la fenêtre atmosphérique de longueurs d'onde de 8-14 µm, supérieure à 70 %.

6. Ensemble de réduction de la température de l'une quelconque des revendications 1 à 3 dans lequel la première propriété de contrôle de la lumière et la première propriété de rayonnement d'énergie nette sont toutes deux fournies par un premier matériau contrôlant la lumière et rayonnant une énergie nette,
l'ensemble de réduction de la température comprenant en outre un matériau transmettant la lumière, le matériau transmettant la lumière possédant une deuxième propriété de contrôle de la lumière comprenant une transmissibilité nette pour l'énergie électromagnétique incidente, intégrée sur la fenêtre atmosphérique de longueurs d'onde de 8-14 µm, supérieure à 70 %,
le matériau transmettant la lumière constituant au moins une première partie de l'au moins une paroi de conduit et le premier matériau rayonnant une énergie nette constituant au moins une deuxième partie de l'au moins une paroi de conduit,
la première partie de l'au moins une paroi de conduit se situant généralement en face de la deuxième partie de l'au moins une paroi de conduit, de sorte que l'air s'écoulant à l'intérieur du conduit de transport d'air s'écoule entre le matériau transmettant la lumière et le premier matériau contrôlant la lumière et rayonnant une énergie nette.

7. Ensemble de réduction de la température de la revendication 6 dans lequel le matériau transmettant la lumière comprend du polyéthylène ou un polynorbornène hydrogéné et réticulé.

8. Ensemble de réduction de la température de l'une quelconque des revendications 1 à 5 dans lequel la première propriété de contrôle de la lumière est fournie par un matériau polymère poreux ou une membrane fibreuse non tissée.

9. Ensemble de réduction de la température de l'une quelconque des revendications 1 à 8, l'ensemble de réduction de la température se situant dans un toit d'un abri pour occupant, de sorte que la première ouverture est couplée à l'environnement ambiant à l'extérieur de l'abri pour occupant et la deuxième ouverture est couplée à un espace intérieur conditionné de l'abri pour occupant.

10. Ensemble de réduction de la température de la revendication 1 dans lequel l'ensemble de matériaux de refroidissement passif comprend un revêtement qui est appliqué à au moins une partie de l'au moins une paroi du conduit de transport d'air,
le revêtement fournissant à la fois la propriété de contrôle de la lumière et la propriété de rayonnement d'énergie nette.

11. Ensemble de réduction de la température de la revendication 1
dans lequel le conduit de transport d'air comprend en outre une paroi centrale qui divise en deux dans la longueur le conduit de transport d'air,
l'ensemble de matériaux de refroidissement passif constituant au moins une partie de la paroi centrale,
l'air s'écoulant à l'intérieur du conduit de transport d'air pouvant s'écouler sur une première et une deuxième surface externe de la paroi centrale.

12. Procédé destiné à générer un écoulement d'air convectif libre avec un ensemble de réduction de la température comprenant les étapes suivantes :
confinement de l'écoulement d'air avec un conduit de transport d'air, le conduit de transport d'air ayant une section transversale qui s'étend sur une longueur allant d'une première extrémité à une deuxième extrémité du conduit de transport d'air, le conduit de transport d'air comprenant en outre une première et une deuxième ouverture, respectivement dans la première et la deuxième extrémité, au moins une paroi étant présente entre la première et la deuxième extrémité,
l'air à l'intérieur du conduit de transport d'air étant refroidi par un ensemble de refroidissement passif,
**caractérisé en ce que**
l'ensemble de refroidissement passif peut fournir une énergie de refroidissement pour refroidir son environnement lorsqu'il est exposé au rayonnement solaire, sans nécessiter d'énergie électrique externe,
écoulement de l'air à l'intérieur du conduit de transport d'air par la première ouverture pour qu'il soit refroidi par l'ensemble de matériaux de refroidissement passif,
écoulement de l'air refroidi hors du conduit de transport d'air par la deuxième ouverture.

13. Ensemble de réduction de la température de la revendication 1 ou 2, dans lequel l'ensemble de matériaux de refroidissement passif comprend un premier matériau émetteur d'énergie nette,
le premier matériau émetteur d'énergie nette étant un matériau émetteur net de type fluorescence anti-Stokes.

14. Ensemble de réduction de la température de la revendication 13 dans lequel l'ensemble de matériaux de refroidissement passif comprend en outre un deuxième matériau émetteur d'énergie nette,
le deuxième matériau émetteur d'énergie nette étant un matériau émetteur d'énergie nette de type émissif, le deuxième matériau émetteur d'énergie nette ayant une transmissibilité supérieure à 70 % dans une plage de longueurs d'onde pour laquelle le premier matériau émetteur d'énergie nette présente une fluorescence anti-Stokes.

15. Ensemble de réduction de la température de l'une quelconque des revendications 1 à 14 comprenant un dispositif de déplacement d'air alimenté électriquement couplé à une des première et deuxième ouvertures, pour augmenter l'écoulement d'air à travers le conduit de transport d'air.
